# EUROPEAN PATENT APPLICATION

(11) **EP 4 686 316 A1**
(43) Date of publication of application: **28.01.2026**
(21) Application number: 24784192.7
(22) Date of filing: 29.03.2024
(51) Int. Cl.: H04W 76/18

(54) **COMMUNICATION METHOD AND COMMUNICATION APPARATUS**

(30) Priority: 06.04.2023 CN 202310402926
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN); ZHU, Yuanping, Shenzhen, Guangdong 518129 (CN)
(74) Representative: Goddar, Heinz J.
(86) International application number: PCT/CN2024/084941
(87) International publication number: WO 2024/208108

(57) **Abstract**

This application provides a communication method and a communication apparatus. In the method, before sending a first message or when sending a first message, a second network device sends indication information to a first network device, so that the first network device can determine, based on the indication information, a configuration of a first mapping relationship used to transmit the first message. In this way, the first message is correctly transmitted, so that a first terminal device reestablishes or resumes a first connection by using a second terminal device, and correctly accesses a corresponding access network device.

## Description

This application claims priority to Chinese Patent Application No. 202310402926.2, filed with the China National Intellectual Property Administration on April 6, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A sidelink user equipment-to-network relay (sidelink UE (user equipment)-to-network relay, SL U2N Relay) is a technology in which UE helps another UE communicate with a base station, and is also referred to as a relay (relay) technology. A communication architecture of the U2N relay includes a remote device (remote UE), a relay device (relay UE), and a base station. The base station includes a distributed unit (distributed unit, DU) and a central unit (central unit, CU). For example, the CU and the DU are connected through an F1 interface. The relay UE is connected to the DU, and a corresponding interface is a Uu interface. The remote UE and the relay UE are directly connected (for example, connected through a sidelink), and a corresponding interface is a PC5 interface. For example, in a CU-DU split architecture, when the remote UE requests, via the relay UE, to reestablish a radio resource control (radio resource control, RRC) connection or resume an RRC connection, how the DU forwards an RRC connection reestablishment or resume message to the relay UE and/or the remote UE becomes a problem to be resolved.

### SUMMARY

This application provides a communication method and a communication apparatus. In the method, an access network device can correctly forward a first connection reestablishment or resume message, so that remote UE can correctly access a corresponding access network device when performing first connection reestablishment/RRC resume through relay UE.

According to a first aspect, this application provides a communication method, and the method is applied to a first network device. The first network device may be an access network device. The first network device may be a distributed unit, or may be a component (for example, a processor, a chip, or a chip system) of the access network device, or may be a logical module that can implement all or some functions of the distributed unit. The first network device receives indication information from a second network device, where the indication information is used to determine a first mapping relationship between a first bearer and a second bearer. The first network device receives a first message from the second network device, and transmits the first message based on the first mapping relationship. The first message is a first downlink message sent by the second network device to a first terminal device in a reestablishment or resume procedure of a first connection, and the first connection is a connection between the first terminal device and the second network device. The first bearer is used to transmit the first message between the first terminal device and the second network device, and the second bearer is used to transmit the first message between a second terminal device and the first network device. The second terminal device provides a relay service for the first terminal device.

In the method, the first network device (for example, a DU) receives the indication information, and determines, based on the indication information, a configuration of the first mapping relationship used to transmit the first message, so that the first terminal device reestablishes or resumes the first connection through the second terminal device, and correctly accesses a corresponding access network device. Optionally, the mapping relationship (mapping) in this application may also be referred to as a mapping relationship configuration (mapping configuration).

In a possible implementation, the first network device receives first indication information from the second network device, where the first indication information indicates a first identifier of the first terminal device, and the first identifier is used by the first network device to associate the first terminal device on an interface between the first network device and the second network device. For example, the first identifier is used to identify the first terminal device on an F1 interface between the first network device and the second network device, and the first network device may associate with the first terminal device based on the first identifier.

In a possible implementation, the first terminal device may reestablish or resume the first connection through an associated relay terminal device before reestablishing or resuming the first connection. In this case, the first indication information received by the first network device carries the first identifier of the first terminal device (for example, an old gNB-DU UE F1AP ID of remote UE). This helps the first network device obtain context information of the first terminal device.

In a possible implementation, the first network device obtains the context information of the first terminal device based on the first identifier, and determines the first mapping relationship based on the context information of the first terminal device.

In the method, if the first terminal device reestablishes or resumes the first connection through the relay terminal device associated with the first terminal device before the first connection is reestablished or resumed, the first network device may search for the context information of the first terminal device based on the first identifier. The context information includes a previously configured mapping relationship between an SRB1 and a Uu relay RLC channel (for example, a mapping relationship that is between the SRB1 and the Uu relay RLC channel and that is configured by the remote UE before the first connection is reestablished or resumed). The first network device may use the previously configured mapping relationship as the first mapping relationship. This helps the first terminal device reestablish or resume the first connection, and correctly access a corresponding access network device.

In a possible implementation, the first network device determines the first mapping relationship based on second indication information and the context information of the first terminal device, where the second indication information indicates the first network device to apply the first mapping relationship.

In the method, if the first terminal device reestablishes or resumes the first connection through the relay terminal device associated with the first terminal device before the first connection is reestablished or resumed, the second network device may indicate, to the first network device, that the previously configured mapping relationship between the SRB1 and the Uu relay RLC channel is used as the first mapping relationship. This helps the first terminal device reestablish or resume the first connection, and correctly access a corresponding access network device.

In a possible implementation, the first network device determines the first mapping relationship based on the first identifier of the first terminal device, the context information of the first terminal device, and information corresponding to the second terminal device. For example, the information corresponding to the second terminal device includes one or more of a second identifier of the second terminal device, service information of the second terminal device, and context information of the second terminal device.

In the method, the first network device may determine, based on the first identifier and the information corresponding to the associated second terminal device (for example, a relay UE F1AP ID of the associated relay UE, historical service information, and UE context information of the second terminal device), that the first terminal device performs access through reestablishment of the first connection or resume of the previously associated relay terminal device. Therefore, the first network device may use the previously configured mapping relationship between the SRB1 and the Uu relay RLC channel as the first mapping relationship, to help the first terminal device reestablish or resume the first connection and correctly access a corresponding access network device.

In a possible implementation, the indication information includes the first mapping relationship.

In the method, the indication information received by the first network device includes a new mapping relationship between the SRB1 and the Uu relay RLC channel. The first network device uses the new mapping relationship between the SRB1 and the Uu relay RLC channel as the first mapping relationship, so that the first terminal device reestablishes or resumes the first connection through the second terminal device, and correctly accesses a corresponding access network device.

In a possible implementation, the first network device determines, based on the first identifier of the first terminal device and the information corresponding to the second terminal device, to release a second mapping relationship. The second mapping relationship is included in the context information of the first terminal device, and the first mapping relationship is different from the second mapping relationship.

In the method, the first network device may determine, based on the second identifier (for example, a relay UE F1AP ID of new relay UE), that the first terminal device performs access through the second terminal device (the new relay UE). Because the context information of the first terminal device further includes another mapping relationship (namely, the second mapping relationship), for example, the second mapping relationship includes an originally configured mapping relationship between an SRB2/a DRB and the Uu relay RLC channel, the first network device may release the second mapping relationship.

In a possible implementation, the first network device receives third indication information from the second network device, where the third indication information indicates the first network device to release a second mapping relationship, the second mapping relationship is included in context information of the first terminal device, and the first mapping relationship is different from the second mapping relationship.

In the method, the second network device may indicate the first network device to release the second mapping relationship. When the first network device receives the third indication information, the first network device may release the originally configured mapping relationship between the SRB2/the DRB and the Uu relay RLC channel based on an indication.

In a possible implementation, the first network device receives a context information establishment or update request message from the second network device, where the context information establishment or update request message is used to configure a second mapping relationship, and the second mapping relationship is different from the first mapping relationship.

In the method, because the first network device determines to release another originally configured mapping relationship, the first network device may reconfigure the second mapping relationship of the first terminal device based on a context information establishment or update procedure triggered by the second network device. This helps the first terminal device reestablish or resume the first connection through the second terminal device, and correctly access a corresponding access network device.

In a possible implementation, the first downlink message is a first connection reestablishment message, a first connection resume message, or a first connection release message; and the first bearer is a signaling radio bearer SRB1 message of the first terminal device.

In a possible implementation, the first downlink message is a first connection establishment message, and the first bearer is an SRB0 message of the first terminal device.

In a possible implementation, the first downlink message is a first connection reject message, and the first bearer is an SRB0 message of the first terminal device.

According to a second aspect, this application provides another communication method, and the method is applied to a second network device. The second network device may be an access network device. The second network device may be a central unit, or may be a component (for example, a processor, a chip, or a chip system) of the access network device, or may be a logical module that can implement all or some functions of the central unit. The second network device sends indication information to a first network device, where the indication information is used to determine a first mapping relationship between a first bearer and a second bearer. The second network device sends a first message to the first network device, where the first message is a first downlink message sent by the second network device to a first terminal device in a reestablishment or resume procedure of a first connection, and the first connection is a connection between the first terminal device and the second network device. The first bearer is used to transmit a first message between the first terminal device and the second network device, and the second bearer is used to transmit the first message between a second terminal device and the first network device. The second terminal device provides a relay service for the first terminal device.

In the method, the second network device sends the indication information to the first network device, so that the first network device can determine, based on the indication information, a configuration of the first mapping relationship used to transmit the first message, and the first terminal device reestablishes or resumes the first connection through the second terminal device, and correctly accesses a corresponding access network device.

In a possible implementation, the second network device sends first indication information to the first network device, where the first indication information indicates a first identifier of the first terminal device, and the first identifier is used by the first network device to associate the first terminal device on an interface between the first network device and the second network device.

In a possible implementation, the first terminal device may reestablish or resume the first connection through a relay terminal device associated before first connection reestablishment or resume. In this case, the relay terminal device associated before the first connection reestablishment or resume may indicate the first identifier of the first terminal device to the first network device. This helps the first network device obtain context information of the first terminal device.

In a possible implementation, the first identifier of the first terminal device is used by the first network device to obtain the context information of the first terminal device, and the context information of the first terminal device includes the first mapping relationship.

In the method, if the first terminal device reestablishes or resumes the first connection through an associated relay terminal device before first connection reestablishment or resume, the context information of the first terminal device includes a mapping relationship that is between an SRB1 and a Uu relay RLC channel and that is configured by remote UE before the first connection reestablishment or resume. The mapping relationship may be used as the first mapping relationship, to help the first terminal device reestablish or resume the first connection and correctly access a corresponding access network device.

In a possible implementation, the second network device determines, based on second message and a second identifier of the second terminal device, the relay terminal device associated with the first terminal device before the reestablishment or resume procedure of the first connection. The second message is used by the first terminal device to request to perform the reestablishment or resume procedure of the first connection.

In the method, the second network device may determine, based on the second message and information corresponding to the second terminal device, that the first terminal device accesses the relay terminal device associated with the first terminal device before the first connection reestablishment or resume.

In a possible implementation, the second network device sends second indication information to the first network device, where the second indication information indicates the first network device to apply the first mapping relationship.

In the method, if the first terminal device reestablishes or resumes the first connection through the relay terminal device associated with the first terminal device before the reestablishment or resume procedure of the first connection, the second network device may indicate, to the first network device, that a previously configured mapping relationship between the SRB1 and the Uu relay RLC channel is used as the first mapping relationship. This helps the first terminal device reestablish or resume the first connection, and correctly access a corresponding access network device.

In a possible implementation, the indication information includes the first mapping relationship.

In the method, the indication information sent by the second network device includes a new mapping relationship between the SRB1 and the Uu relay RLC channel (different from the previously configured mapping relationship between the SRB1 and the Uu relay RLC channel), to help the first terminal device reestablish or resume the first connection through the second terminal device, and correctly access a corresponding access network device.

In a possible implementation, the second network device determines, based on a second message and a second identifier of the second terminal device, that a relay terminal device associated with the second terminal device is different from a relay terminal device associated with the first terminal device before a reestablishment or resume procedure of a first connection, where the second message is used by the first terminal device to request reestablishment or resume of the first connection. The second network device determines to update the first mapping relationship.

In the method, the second network device may determine, based on the second message and the information corresponding to the second terminal device, that the first terminal device performs access through the second terminal device (new relay UE), and the first mapping relationship needs to be updated.

In a possible implementation, the second network device sends third indication information to the first network device, where the third indication information indicates the first network device to release a second mapping relationship, the second mapping relationship is included in context information of the first terminal device, and the first mapping relationship is different from the second mapping relationship.

In the method, the second network device may indicate the first network device to release the second mapping relationship, so that the first network device may release the second mapping relationship based on the indication, for example, release an originally configured mapping relationship between an SRB2/a DRB and a Uu relay RLC channel.

In a possible implementation, the second network device sends a context information establishment or update request message of the first terminal device to the first network device, where the context information establishment or update request message is used to configure a second mapping relationship, and the second mapping relationship is different from the first mapping relationship.

In the method, assuming that the first terminal device performs access through the second terminal device, the second network device determines that a mapping relationship other than the first mapping relationship needs to be updated. For example, updating the second mapping relationship in a context information establishment or update procedure includes: sending a context information establishment or update request message of the first terminal device to the second network device, thereby facilitating correct data transmission between the first terminal device and the second terminal device.

In a possible implementation, the second network device sends first configuration information to the second terminal device, where the first configuration information includes the first mapping relationship. Optionally, the first configuration information further includes a third mapping relationship between the first bearer and a third bearer, and the third bearer is used to transmit the first message between the first terminal device and the second terminal device.

In the method, the second network device may configure a re-determined first mapping relationship for the new relay UE, to help the first terminal device correctly transmit data between the second terminal device and the first terminal device. Optionally, the second network device may further reconfigure a third mapping relationship (for example, a mapping relationship between the SRB1 and a PC5 relay RLC channel).

In a possible implementation, the first downlink message is a first connection reestablishment message, a first connection resume message, or a first connection release message; and the first bearer is a signaling radio bearer SRB1 message of the first terminal device.

In a possible implementation, the first downlink message is a first connection establishment message, and the first bearer is an SRB0 message of the first terminal device.

In a possible implementation, the first downlink message is a first connection reject message, and the first bearer is an SRB0 message of the first terminal device.

According to a third aspect, this application provides a communication apparatus. The communication apparatus may be an access network device (for example, a DU), an access network device apparatus, or an apparatus that can be used together with an access network device. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to receive indication information from a second network device, where the indication information is used to determine a first mapping relationship between a first bearer and a second bearer. The communication unit is further configured to receive a first message from the second network device. The processing unit is configured to transmit the first message based on the first mapping relationship through the communication unit. The first message is a first downlink message sent by the second network device to a first terminal device in a reestablishment or resume procedure of a first connection, and the first connection is a connection between the first terminal device and the second network device. The first bearer is used to transmit the first message between the first terminal device and the second network device, and the second bearer is used to transmit the first message between a second terminal device and the first network device. The second terminal device provides a relay service for the first terminal device.

In a possible implementation, that the communication unit is configured to receive the indication information from the second network device includes:
receiving first indication information from the second network device, where the first indication information indicates a first identifier of the first terminal device, and the first identifier is used by the first network device to associate the first terminal device on an F1 interface between the first network device and the second network device.

In a possible implementation, that the processing unit is configured to determine the first mapping relationship between the first bearer and the second bearer includes:
obtaining context information of the first terminal device based on the first identifier; and
determining the first mapping relationship based on the context information of the first terminal device.

In a possible implementation, that the processing unit is configured to determine the first mapping relationship based on the context information of the first terminal device includes:
determining the first mapping relationship based on second indication information and the context information of the first terminal device, where the second indication information indicates the first network device to apply the first mapping relationship.

In a possible implementation, that the processing unit is configured to determine the first mapping relationship based on the context information of the first terminal device includes:
determining the first mapping relationship based on the first identifier of the first terminal device, the context information of the first terminal device, and information corresponding to the second terminal device, where the information corresponding to the second terminal device includes one or more of a second identifier of the second terminal device, service information of the second terminal device, and context information of the second terminal device.

In a possible implementation, the indication information includes the first mapping relationship.

In a possible implementation, the processing unit is further configured to determine, based on the first identifier of the first terminal device and the information corresponding to the second terminal device, to release a second mapping relationship. The second mapping relationship is included in the context information of the first terminal device, and the first mapping relationship is different from the second mapping relationship.

In a possible implementation, the communication unit is further configured to receive third indication information from the second network device, where the third indication information indicates the first network device to release a second mapping relationship, the second mapping relationship is included in the context information of the first terminal device, and the first mapping relationship is different from the second mapping relationship.

In a possible implementation, the communication unit is further configured to receive a context information establishment or update request message from the second network device, where the context information establishment or update request message is used to configure a second mapping relationship, and the second mapping relationship is different from the first mapping relationship.

In a possible implementation, the first downlink message is a first connection reestablishment message, a first connection resume message, or a first connection release message; and the first bearer is a signaling radio bearer SRB1 message of the first terminal device.

In a possible implementation, the first downlink message is a first connection establishment message, and the first bearer is an SRB0 message of the first terminal device.

In a possible implementation, the first downlink message is a first connection reject message, and the first bearer is an SRB0 message of the first terminal device.

According to a fourth aspect, this application provides another communication apparatus. The communication apparatus may be an access network device (for example, a CU), an apparatus of the access network device, or an apparatus that can be used together with the access network device. In a possible implementation, the communication apparatus may include a functional module. The functional module may be implemented by a hardware circuit, software, or a combination of a hardware circuit and software.

In a possible implementation, the communication apparatus may include a communication unit and a processing unit. The communication unit is configured to send indication information to the first network device, where the indication information is used to determine the first mapping relationship between the first bearer and the second bearer. The communication unit is further configured to send a first message to the first network device, where the first message is a first downlink message sent by the second network device to the first terminal device in a reestablishment or resume procedure of a first connection, and the first connection is a connection between the first terminal device and the second network device. The first bearer is used to transmit a first message between the first terminal device and the second network device, and the second bearer is used to transmit the first message between the second terminal device and the first network device. The second terminal device provides a relay service for the first terminal device.

In a possible implementation, that the communication unit is configured to send the indication information to the first network device includes:
sending first indication information to the first network device, where the first indication information indicates a first identifier of the first terminal device, and the first identifier is used by the first network device to associate the first terminal device on an F1 interface between the first network device and the second network device.

In a possible implementation, the first identifier of the first terminal device is used by the first network device to obtain the context information of the first terminal device, and the context information of the first terminal device includes the first mapping relationship.

In a possible implementation, the processing unit is configured to determine, based on a second message and a second identifier of the second terminal device, that the second terminal device is a relay terminal device associated with the first terminal device before the reestablishment or resume procedure of the first connection. The second message is used by the first terminal device to request to perform the reestablishment or resume procedure of the first connection.

In a possible implementation, that the communication unit is configured to send the indication information to the first network device includes:
sending second indication information to the first network device, where the second indication information indicates the first network device to apply the first mapping relationship.

In a possible implementation, the indication information includes the first mapping relationship.

In a possible implementation, the processing unit is further configured to determine, based on a second message and a second identifier of the second terminal device, that a relay terminal device associated with the second terminal device is different from a relay terminal device associated with the first terminal device before the reestablishment or resume procedure of the first connection, where the second message is used by the first terminal device to request to reestablish or resume the first connection. The processing unit is further configured to determine to update the first mapping relationship.

In a possible implementation, the communication unit is further configured to send third indication information to the first network device, where the third indication information indicates the first network device to release a second mapping relationship. The second mapping relationship is included in the context information of the first terminal device, and the first mapping relationship is different from the second mapping relationship.

In a possible implementation, the communication unit is further configured to send a context information establishment or update request message to the first terminal device, where the context information establishment or update request message is used to configure a second mapping relationship, and the second mapping relationship is different from the first mapping relationship.

In a possible implementation, the communication unit is further configured to send first configuration information to the second terminal device, where the first configuration information includes the first mapping relationship. Optionally, the first configuration information further includes a third mapping relationship between the first bearer and a third bearer, and the third bearer is used to transmit the first message between the first terminal device and the second terminal device.

In a possible implementation, the first downlink message is a first connection reestablishment message, a first connection resume message, or a first connection release message; and the first bearer is a signaling radio bearer SRB1 message of the first terminal device.

In a possible implementation, the first downlink message is a first connection establishment message, and the first bearer is an SRB0 message of the first terminal device.

In a possible implementation, the first downlink message is a first connection reject message, and the first bearer is an SRB0 message of the first terminal device.

According to a fifth aspect, this application provides a communication apparatus, including a processor, configured to execute instructions. Optionally, the communication apparatus further includes a memory. The memory is configured to store the instructions. When the instructions are executed by the processor, the communication apparatus is enabled to implement the method according to any one of the first aspect and the possible implementations of the first aspect. Optionally, the processor is coupled to the memory.

According to a sixth aspect, this application provides a communication apparatus, including a processor, configured to execute instructions. Optionally, the communication apparatus further includes a memory. The memory is configured to store the instructions. When the instructions are executed by the processor, the communication apparatus is enabled to implement the method according to any one of the second aspect and the possible implementations of the second aspect. Optionally, the processor is coupled to the memory.

According to a seventh aspect, this application provides a communication system. The communication system includes a plurality of the apparatuses or devices according to the third to sixth aspects. The apparatuses or devices are enabled to perform the methods according to the first and second aspects and any one of the possible implementations of the first and second aspects.

According to an eighth aspect, this application provides a computer-readable storage medium. The computer-readable storage medium stores instructions. When the instructions are run on a computer, the computer is enabled to perform the methods according to the first and second aspects and any one of the possible implementations of the first and second aspects.

According to a ninth aspect, this application provides a chip. The chip includes a processor and an interface, and optionally, may further include a memory, configured to implement the method according to any one of the first aspect, the second aspect, and the possible implementations of the first aspect and the second aspect.

According to a tenth aspect, this application provides a chip system. The chip system includes a processor and an interface, and optionally, may further include a memory, configured to implement the method according to any one of the first aspect, the second aspect, and the possible implementations of the first aspect and the second aspect. The chip system may include a chip, or may include a chip and another discrete component.

According to an eleventh aspect, this application provides a computer program product, including instructions. When the instructions are run on a computer, the computer is enabled to perform the method in any one of the first aspect and the second aspect, and the possible implementations of the first aspect and the second aspect.

### BRIEF DESCRIPTION OF DRAWINGS

FIG. 1 is a diagram of a communication system according to this application;
FIG. 2 is a diagram of a user plane protocol stack of an L2 U2N relay;
FIG. 3 is a diagram of a routing process of downlink data of remote UE;
FIG. 4 is a diagram of a CU-DU split architecture;
FIG. 5 is a diagram of user plane and control plane protocol stacks in a CU-DU split architecture;
FIG. 6A and FIG. 6B are a schematic flowchart of RRC connection reestablishment performed by UE in a CU-DU split architecture;
FIG. 7 is a schematic flowchart of a communication method according to this application;
FIG. 8 is a schematic flowchart of another communication method according to this application;
FIG. 9 is a schematic flowchart of still another communication method according to this application;
FIG. 10A to FIG. 10C are a schematic flowchart of yet another communication method according to this application;
FIG. 11 is a diagram of a communication apparatus according to this application; and
FIG. 12 is a diagram of another communication apparatus according to this application.

### DESCRIPTION OF EMBODIMENTS

In embodiments of this application, "/" may represent an "or" relationship between associated objects. For example, A/B may represent A or B. "and/or" may be used to indicate that there are three relationships between associated objects. For example, A and/or B may represent the following three cases: Only A exists, both A and B exist, and only B exists, where A and B may be singular or plural. For ease of describing the technical solutions in embodiments of this application, in the embodiments of this application, words such as "first" and "second" may be used to distinguish technical features with a same or similar function. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

The following describes the technical solutions in embodiments of this application with reference to the accompanying drawings in embodiments of this application.

To resolve a problem of how a DU forwards a first downlink message to relay UE and/or remote UE in an RRC connection reestablishment/resume scenario of the remote UE, this application provides a communication method. In the method, a gNB-DU may apply an SRB1 mapping relationship configuration in original UE context of the remote UE or obtain an SRB1 mapping relationship configuration based on an indication of a gNB-CU, so that the remote UE correctly accesses a DU and a CU when performing RRC reestablishment/RRC resume by using the relay UE.

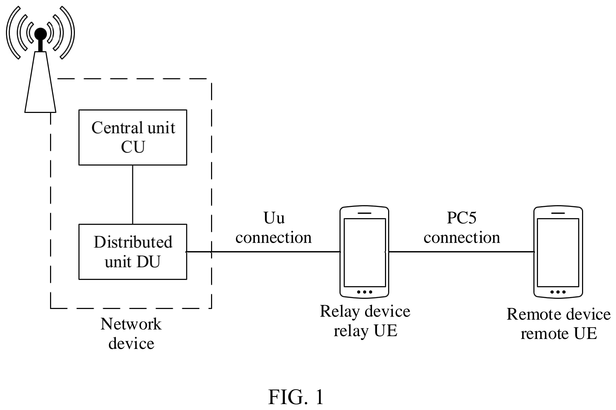

The communication method provided in this application may be applied to a communication system shown in FIG. 1. For example, the communication system includes network devices (for example, a gNB-DU and a gNB-CU), a relay device (for example, relay UE), and a remote device (for example, remote UE). The network devices include a distributed unit DU and a central unit CU, and the CU and the DU communicate with each other through an F1 interface. The relay device and the remote device may be terminal devices. For example, the relay device communicates with the remote device through a PC5 interface, and the relay device communicates with the network device through a Uu interface, as shown in FIG. 1. Optionally, in this application, the remote device may also be referred to as a first terminal device, and the relay device may also be referred to as a second terminal device. In a possible implementation, the network device is an access network device that provides a user access function, like a base station. The network device and the terminal device may perform signal/data transmission. Optionally, the communication method provided in this application is also applicable to a scenario in which the remote device communicates with the network device through relays of a plurality of relay devices. FIG. 1 is merely an example, and does not limit the solutions of this application.

The communication system in this application may include, but is not limited to, a communication system using various radio access technologies (radio access technologies, RATs), for example, may be an LTE communication system; a 5G (or referred to as new radio (new radio, NR)) communication system; a transition system between the LTE communication system and the 5G communication system, where the transition system may also be referred to as a 4.5G communication system; or a future communication system, like a 6th generation (6th generation, 6G) or even a 7th generation (7th generation, 7G) system. A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of communication network architectures and emergence of new service scenarios, the technical solutions provided in embodiments of this application are also applicable to similar technical problems.

The terminal device, also referred to as a user equipment (user equipment, UE), a mobile station (mobile station, MS), a mobile terminal (mobile terminal, MT), or the like, is a device that provides voice and/or data connectivity for a user, for example, a handheld device or a vehicle-mounted device having a wireless connection function. Currently, for example, the terminal device is a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved PLMN network, a terminal device in a future communication system, or the like.

The network device is a radio access network (radio access network, RAN) node (or device) that connects the terminal device to a wireless network, for example, may be a base station. For example, the RAN node is a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in an internet of vehicles (for example, a vehicle-to-everything (vehicle-to-everything, V2X) device), a communication device in device-to-device (device-to-device, D2D) communication, or the like. The access network device may include a central unit (central unit, CU) node, a distributed unit (distributed unit, DU) node, or a RAN device including a CU node and a DU node. In a possible manner, a RAN device including a CU node and a DU node splits protocols layer of an eNB in a long term evolution (long term evolution, LTE) system. Functions of some protocol layers are controlled by the CU in a centralized manner, and functions of some or all remaining protocol layers are distributed in the DU. The CU controls the DU in a centralized manner.

In a possible scenario, a plurality of RAN nodes cooperatively assist a terminal in implementing wireless access, and different RAN nodes separately implement some functions of a base station. For example, the RAN node may be a CU, a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open-radio CU (open-radio CU, O-CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The access network device in embodiments may alternatively be an open-radio access network (open-radio access network, O-RAN) device, and the O-RAN device may include an O-DU and an O-CU. In embodiments of this application, a function of the base station may be performed by a module (for example, a chip) in the base station, or may be performed by a control subsystem including a function of the base station. The control subsystem including the function of the base station herein may be a control center in the foregoing application scenarios like a smart grid, industrial control, smart transportation, and a smart city. A specific technology and a specific device form used by the radio access network device are not limited in embodiments of this application. For ease of description, the following uses an example in which the base station is used as the radio access network device for description.
I. For ease of understanding, the following describes in detail definitions of related terms in this application.

### 1. Sidelink (sidelink) communication

In a wireless communication system, UEs may perform data communication through a network device, or may directly communicate with each other without relying on a network device. An interface between the UEs is referred to as a PC5 interface, similar to a Uu interface between the UE and a base station. A link between the UEs is referred to as a sidelink. For example, a typical application scenario of the sidelink communication is vehicle-to-everything (vehicle-to-everything, V2X). In the vehicle-to-everything, it is assumed that each vehicle represents one UE, and data may be directly transmitted between UEs through a sidelink without using a network. In this way, communication delays can be effectively reduced. For example, the relay device and the remote device in the communication system shown in FIG. 1 may directly communicate with each other through a sidelink.

Specifically, the sidelink supports broadcast communication, unicast communication, and multicast communication. The broadcast communication is similar to broadcasting system information by a base station. To be specific, the UE sends broadcast service data to the outside without encryption, and any other UE within an effective receiving range can receive the broadcast service data if the UE is interested in a broadcast service. The unicast communication is similar to data communication performed after an RRC connection is established between UE and a base station, and a unicast connection needs to be first established between two UEs. After the unicast connection is established, the two UEs may perform data communication based on a negotiated identifier. The data may be encrypted, or may not be encrypted. Compared with broadcast communication, the unicast communication can be performed only between two UEs between which a unicast connection has been established. The multicast communication is communication between all UEs in a communication group, and any UE in the group may receive and send data of a multicast service.

One unicast communication on the sidelink corresponds to a pair of a source layer 2 identifier (source L2 ID (layer-2 identifier)) and a destination layer 2 identifier (destination L2 ID). A subheader of a media access control protocol data unit (media access control protocol data unit, MAC PDU) of each sidelink includes the source L2 ID and the destination L2 ID, so that data can be transmitted from a transmitter to a correct receiver.

### 2. Radio bearer (radio bearer, RB)

The radio bearer is a general term for a series of protocol entities and configurations that are allocated by a base station to UE, and is a service that is provided by a layer 2 and that is used to transmit user data between the UE and the base station. The radio bearer includes a packet data convergence protocol (packet data convergence protocol, PDCP) entity, a radio link control (radio link control, RLC) protocol entity, a series of resources allocated by a MAC protocol entity and a physical layer (physical layer, PHY), and the like. The radio bearer is classified into a data radio bearer (data radio bearer, DRB) and a signaling radio bearer (signaling radio bearer, SRB). The DRB is used to carry data, and the SRB is used to carry a signaling message. In a sidelink communication scenario, UEs communicate with each other by using a sidelink radio bearer (sidelink radio bearer, SLRB), and the SLRB includes a sidelink data radio bearer (SL DRB) and a sidelink signaling radio bearer (SL SRB). In a protocol text, a radio bearer configuration generally includes only configurations of a PDCP layer and a service data adaptation protocol (service data adaptation protocol, SDAP) layer. A protocol entity below an RLC layer is referred to as an RLC bearer (RLC bearer), and a corresponding configuration is provided in an RLC bearer configuration. The RLC bearer includes a protocol entity and a configuration below the RLC layer, is a lower-layer part of a radio bearer, and includes a series of resources such as an RLC protocol entity and a logical channel. One RLC bearer is associated with one logical channel at a MAC layer. One RLC bearer is associated with one PDCP entity, that is, one RLC serves one radio bearer RB.

### 3. Relay (relay) technology

In an existing protocol standard, an R17 sidelink UE-to-network relay (SL U2N Relay) is a technology in which UE helps another UE communicate with a base station, and is also referred to as a relay technology. For example, the communication system shown in FIG. 1 may be considered as a communication architecture of a U2N relay, and the remote UE communicates with the base station through cooperation of the relay UE. The remote UE and the relay UE communicate with each other through a sidelink, and a corresponding interface is PC5. The relay UE and the base station are directly connected, and communicate with each other through a Uu interface.

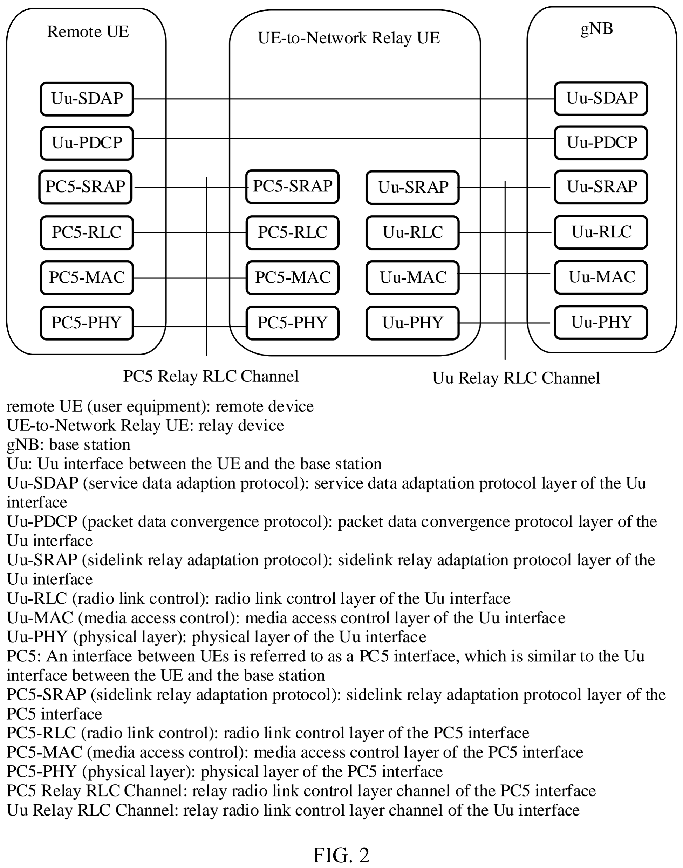

The U2N relay technology includes two designs: L2 and Layer 3 (Layer-3, L3). This application mainly relates to a protocol architecture of an L2 U2N relay. The following describes the protocol architecture of the L2 U2N relay. For example, FIG. 2 is a diagram of a user plane protocol stack of the L2 U2N relay. A data packet of the remote UE is relayed and forwarded below a PDCP layer of the relay UE. In other words, the relay UE maintains only a relay RLC bearer, including an RLC layer, a MAC layer, and a PHY layer. In other words, there are end-to-end SDAP and PDCP layers but no end-to-end RLC, MAC, and PHY layers between the remote UE and the base station. Optionally, a control plane protocol stack of the L2 U2N relay is similar to that in FIG. 2, and a difference lies in that there are end-to-end RRC and PDCP layers between the remote UE and the base station. Details are not described herein again.

In addition, a sidelink relay adaptation protocol layer (sidelink relay adaptation protocol layer, SRAP) is added between the RLC layer and the PDCP layer in the protocol stack. A main function of the SRAP layer is multiplexing and demultiplexing of a radio bearer, that is, supporting multiplexing of different end-to-end radio bearers onto one RLC bearer and a corresponding demultiplexing process. An RLC bearer between the remote UE and the relay UE is referred to as a PC5 relay RLC channel (channel)/bearer, and an RLC bearer between the relay UE and the base station is referred to as a Uu relay RLC channel/bearer. Through multiplexing, different radio bearers of one remote UE may be multiplexed onto one PC5 relay RLC channel. Alternatively, in a scenario in which one relay UE is connected to a plurality of remote UEs, different radio bearers of one or more remote UEs may be multiplexed onto one Uu relay RLC channel.

During downlink transmission, the SRAP layer of the base station may multiplex data on a plurality of radio bearers of one or more remote UEs onto one Uu relay RLC bearer. On a sidelink of each remote UE, data on one or more radio bearers of the remote UE may be mapped to one PC5 relay RLC bearer. Similarly, during uplink transmission, the SRAP layer of the remote UE may map data on a plurality of radio bearers of the remote UE to one PC5 relay RLC bearer. An adaptation layer of the relay UE may multiplex data on different radio bearers of one or more remote UEs onto one Uu relay RLC bearer, to implement bearer multiplexing.

To distinguish between data of different remote UEs, the base station allocates one remote UE ID, also referred to as a local identifier (local ID), to each remote UE, and the local ID is carried in a data packet routing process, to identify remote UE to which the data belongs. It is specified in an existing protocol that the local ID of the remote UE is allocated by a base station in which the relay UE is located, and the allocated local ID may be unique in the base station, or may be unique in the relay UE. In a possible implementation, after the remote UE establishes a unicast connection to the relay UE, the relay UE sends an RRC message (for example, a SidelinkUEInformationNR (SUI) message) to the base station, where the message carries an L2 ID of the remote UE, used to request the base station to allocate a local ID to the remote UE.

Before data transmission, the base station performs SRAP configuration for the remote UE and the relay UE for data routing. The SRAP configuration may include a mapping relationship between a radio bearer ID (an RB ID, including an SRB ID/DRB ID) of the remote UE and a Uu relay RLC channel/PC5 relay RLC channel. Specifically, the base station configures a mapping relationship between a radio bearer (an SRB or a DRB) and a PC5 relay RLC channel for the remote UE, and configures a local ID of the remote UE and a mapping relationship between a radio bearer of the remote UE and a Uu/PC5 relay RLC channel for the relay UE. When sending uplink or downlink data, the remote UE or the base station adds the local ID and the RB ID of the remote UE to an SRAP header. Based on the SRAP configuration, data of the remote UE can be correctly relayed and forwarded by the relay UE.

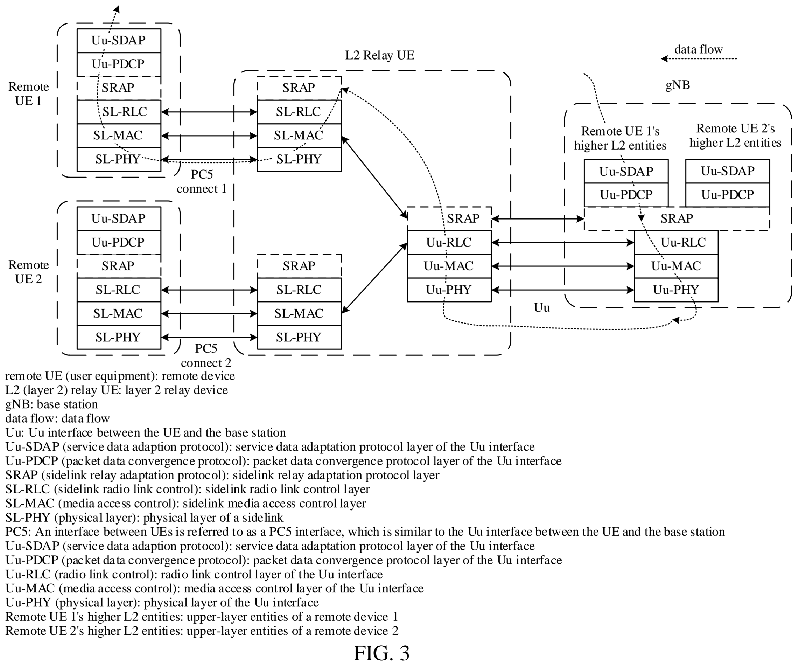

For example, FIG. 3 is a diagram of a routing process of downlink data of the remote UE. The SRAP layer of the base station receives a PDCP PDU of remote UE 1 from the PDCP layer, adds a local ID of the remote UE 1 and ID information of a radio bearer (an SRB or a DRB) to the SRAP header, and delivers the PDCP PDU to the Uu relay RLC channel based on a mapping relationship configuration. After receiving a data packet from the Uu relay RLC channel, an adaptation layer of the relay UE may deliver the data packet to a correct PC5 relay RLC channel based on a mapping relationship configured by the base station. After receiving the data packet from the PC5 relay RLC channel, the remote UE delivers, based on the bearer ID information in the SRAP header, the data packet to a corresponding PDCP layer for processing. Optionally, a routing process of the uplink data is similar to a routing process of the downlink data. Details are not described herein again.

### 4. CU-DU split architecture

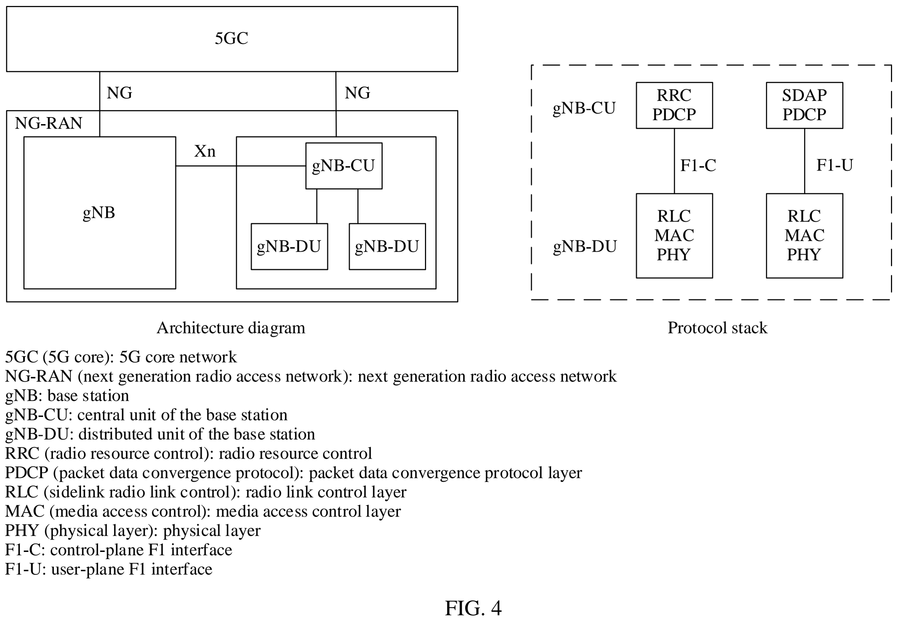

For example, FIG. 4 is a diagram of a CU-DU split architecture. The architecture includes a 5G core network and a next generation radio access network (next generation radio access network, NG-RAN). The NG-RAN includes a series of gNBs (including a gNB-CU and a gNB-DU) connected to the 5G core network. The gNB is connected to the 5G the core network through an NG interface, and the gNBs are connected to each other through an Xn interface. Specifically, in the CU-DU split architecture, one gNB may be divided into one gNB-CU and one or more gNB-DUs. The gNB-CU and the gNB-DU are connected through an F1 interface.

In a possible implementation, for example, in the CU-DU split architecture, the gNB-CU is responsible for RRC, SDAP, and PDCP protocol layers, and the gNB-DU is responsible for RLC, MAC, and PHY protocol layers. For another example, for a control plane (control plane, CP), a gNB-CU-CP is responsible for RRC and a PDCP entity corresponding to an SRB; and for a user plane (user plane, UP), a gNB-CU-UP is responsible for an SDAP and a PDCP entity corresponding to a DRB.

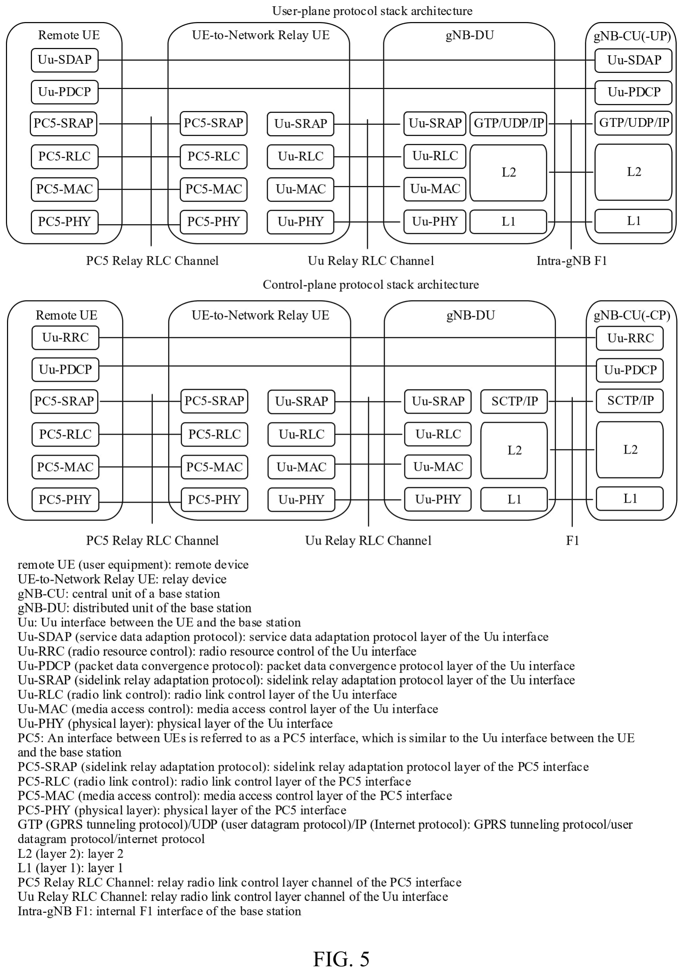

For example, in the CU-DU split architecture, a protocol stack of the CU-DU split architecture is shown in FIG. 5. The protocol stack includes but is not limited to the following design principles.
(1) The SRAP is located on a DU side.
(2) The gNB-CU determines a mapping relationship configuration at the SRAP layer.
(3) The gNB-DU determines a PC5/Uu relay RLC channel configuration based on an indication of the gNB-CU.
(4) The gNB-CU allocates a local ID of the remote UE.
(5) An SRAP layer configuration and the PC5 relay RLC channel configuration are performed for the remote UE by using an F1AP message of the remote UE (the message carries an identifier (F1AP ID) of the remote UE on an F1 interface, and is used to generate a related configuration of the remote UE).
(6) The SRAP layer configuration and the PC5/Uu relay RLC channel configuration are performed for the relay UE by using an F1AP message of the relay UE (the message carries an identifier of the relay UE on the F1 interface, and is used to generate a related configuration of the relay UE).

It should be noted that the CU-DU split architecture and the protocol stack shown in FIG. 4 and FIG. 5 are merely examples. A division manner or a name of the protocol stack is not limited in this application.

5. In the CU-DU split architecture, a procedure in which UE performs RRC connection reestablishment is as follows.

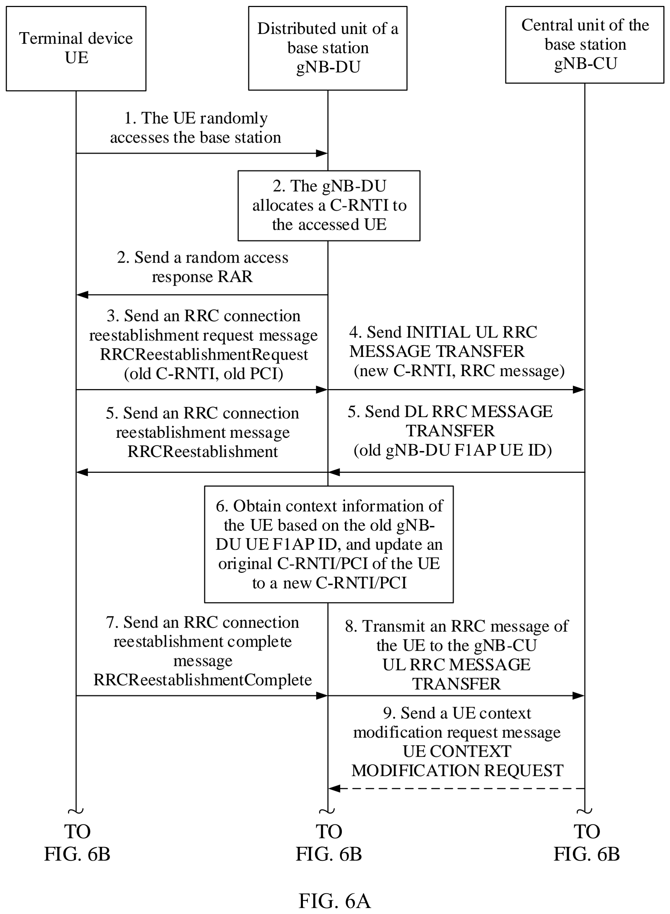

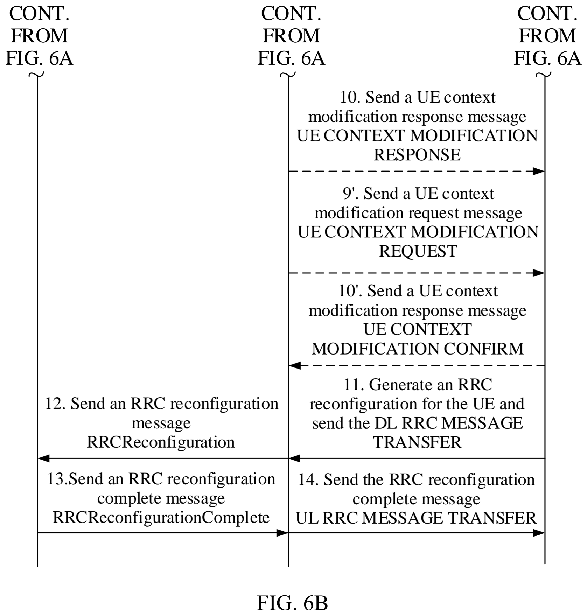

For example, FIG. 6A and FIG. 6B are a schematic flowchart of RRC connection reestablishment performed by UE in the CU-DU split architecture. The procedure includes the following steps.

Step 1: The UE accesses a base station through random access (for example, the UE sends a preamble (preamble) to a gNB-DU).

Step 2: The gNB-DU allocates a new cell-radio network temporary identifier (cell-radio network temporary identifier, C-RNTI) to the accessed UE, and sends a random access response (random access response, RAR) message to the UE.

Step 3: The UE sends an RRC connection reestablishment request (RRCReestablishmentRequest) message to the gNB-DU, where the message includes an original C-RNTI of the UE and a physical cell identifier (physical cell identifier, PCI).

Step 4: The gNB-DU sends an INITIAL UL RRC MESSAGE TRANSFER message to a gNB-CU, where the INITIAL UL RRC MESSAGE TRANSFER message includes the RRCReestablishmentRequest message sent by the UE, a bottom-layer configuration determined by the gNB-DU, and a new C-RNTI allocated by the gNB-DU.

Step 5: The gNB-CU generates an RRC connection reestablishment (RRCReestablishment) message, and sends the RRC connection reestablishment message to the gNB-DU by using a DL RRC MESSAGE TRANSFER message. If the UE accesses an original gNB-DU (namely, a gNB-DU accessed when the UE establishes an RRC connection), the gNB-CU sends an old gNB-DU UE F1AP ID to the gNB-DU (for example, the UE in FIG. 6A and FIG. 6B performs RRC connection reestablishment on the original gNB-DU, that is, RRC connection establishment and RRC connection reestablishment are performed on a same gNB-DU).

Step 6: The gNB-DU obtains context information of the UE based on the old gNB-DU UE F1AP ID (for example, the context information of the UE may include a UE-related configuration maintained by the gNB-DU), and updates an original C-RNTI/PCI of the UE to a new C-RNTI/PCI.

Step 7: The UE sends an RRC connection reestablishment complete (RRCReestablishmentComplete) message to the gNB-DU.

Step 8: The gNB-DU transmits an RRC message of the UE to the gNB-CU by using a UL RRC MESSAGE TRANSFER message.

Step 9: The gNB-CU triggers a UE context modification procedure, for example, sends a UE context modification request (UE CONTEXT MODIFICATION REQUEST) message to the gNB-DU, where the message includes radio bearer establishment indication information.

Step 10: The gNB-DU sends a UE context modification response (UE CONTEXT MODIFICATION RESPONSE) message to the gNB-CU.

Steps 9 and 10 are optional steps. For example, the context information of the UE may not be modified, that is, the procedure in FIG. 6A and FIG. 6B does not include steps 9 and 10. Optionally, the gNB-DU triggers the UE context modification procedure. In this case, the sender and the receiver of the message in steps 9 and 10 are exchanged (for example, steps 9' and 10' in FIG. 6B). Optionally, if the UE accesses the base station by using a new gNB-DU, UE context reestablishment further needs to be performed.

Step 11: The gNB-CU generates an RRC reconfiguration (RRCReconfiguration) message of the UE, and sends the RRCReconfiguration message to the gNB-DU.

Step 12: The gNB-DU sends the RRCReconfiguration message to the UE.

Step 13: The UE sends an RRC reconfiguration complete (RRCReconfigurationComplete) message to the gNB-DU, to indicate that configuration is completed.

Step 14: The gNB-DU sends the RRCReconfigurationComplete message to the gNB-CU.

### II. Communication method provided in this application

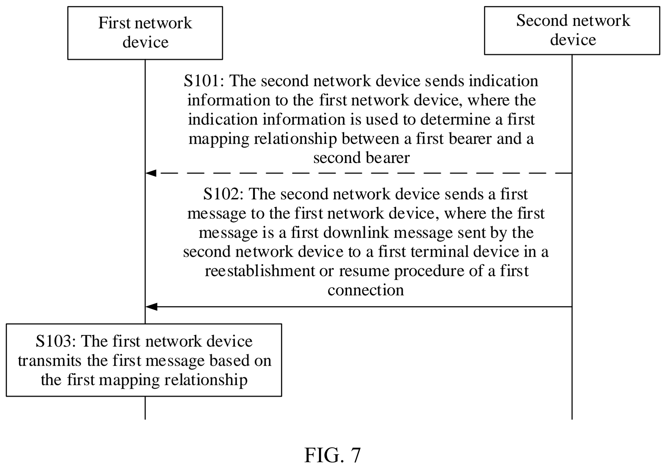

FIG. 7 is a schematic flowchart of a communication method according to this application. The communication method may be applied to the communication system shown in FIG. 1. For example, the communication method may be implemented through interaction between a first network device (for example, a DU) and a second network device (for example, a CU). The communication method includes the following steps.

S101: The second network device sends indication information to the first network device, where the indication information is used to determine a first mapping relationship between a first bearer and a second bearer, and correspondingly, the first network device receives the indication information from the second network device.

S102: The second network device sends a first message to the first network device, where the first message is a first downlink message sent by the second network device to a first terminal device in a reestablishment or resume procedure of a first connection.

The first connection is a connection between the first terminal device and the second network device, the first bearer is used to transmit the first message between the first terminal device and the second network device, and the second bearer is used to transmit the first message between a second terminal device and the first network device. The second terminal device provides a relay service for the first terminal device.

For example, in the communication system shown in FIG. 1, the first terminal device may be remote UE, the second terminal device may be relay UE, the first network device is a DU (the DU is used as an example for description in this application), and the second network device is a CU (the CU is used as an example for description in this application). For example, the first connection is an RRC connection between the remote UE and a gNB-CU, and correspondingly, the first message is an RRC connection reestablishment message, an RRC connection resume message, or an RRC connection release message. For example, the first bearer is a signaling radio bearer SRB of the remote UE, and is used to transmit an RRC connection reestablishment message, an RRC connection resume message, or an RRC connection release message between the remote UE and the gNB-CU. The second bearer is a Uu relay RLC channel, and is used to transmit an RRC connection reestablishment message, an RRC connection resume message, or an RRC connection release message between the relay UE and a gNB-DU. The first bearer may be multiplexed on the second bearer, that is, an SRB of the remote UE may be multiplexed on the Uu relay RLC channel. The gNB-CU may perform SRAP configuration on the relay UE. The SRAP configuration includes the first mapping relationship between the first bearer and the second bearer, and the first mapping relationship may be a mapping relationship (also referred to as a mapping relationship configuration, mapping configuration) between the SRB of the remote UE and the Uu relay RLC channel. Optionally, the gNB-DU also needs to obtain the first mapping relationship, so that the gNB-DU transmits the first message to the relay UE based on the first mapping relationship.

For example, if the indication information sent by the second network device to the first network device is used to determine the first mapping relationship between the first bearer and the second bearer, before sending the RRC connection reestablishment message or the RRC connection resume message, the first network device may determine a mapping relationship that is between the SRB of the remote UE and the Uu relay RLC channel and that is used to send the RRC connection reestablishment message or the RRC connection resume message, so that the remote UE completes an RRC reestablishment/RRC resume procedure by using the relay UE.

Specifically, the first message is the first downlink message sent by the second network device to the first terminal device in the reestablishment or resume procedure of the first connection, and may include but is not limited to the following messages.

### (1) The first message is an RRC connection reestablishment message.

For example, in an RRC connection reestablishment procedure, the gNB-CU generates an RRC connection reestablishment message, and transmits the RRC connection reestablishment message to the remote UE through the gNB-DU and the relay UE. In this scenario, the first message may also be referred to as a first downlink SRB1 message in the RRC connection reestablishment procedure. The first mapping relationship is a mapping relationship between an SRB1 and the Uu relay RLC channel. In this example, the first downlink message is a downlink SRB1 message sent by a CU to a DU.

### (2) The first message is an RRC connection resume message.

For example, in an RRC connection resume procedure (the RRC connection resume procedure is used by the UE to enter a connected state from a non-connected state (RRC_INACTIVE)), the gNB-CU generates an RRC connection resume message, and transmits the RRC connection resume message to the remote UE through the gNB-DU and the relay UE. In this scenario, the first message may also be referred to as a first downlink SRB1 message in the RRC connection resume procedure. The first mapping relationship is a mapping relationship between an SRB1 and the Uu relay RLC channel. In this example, the first downlink message is a downlink SRB1 message sent by a CU to a DU.

### (3) The first message is an RRC connection release message.

For example, in an RRC connection resume procedure, if the gNB-CU indicates the first terminal device to resume to a non-connected state or enter an idle state (for example, indicates the UE to release an RRC connection or suspend an RRC connection), the gNB-CU may generate an RRC connection release (RRCrelease with suspend or RRCrelease) message. In addition, the gNB-DU and the relay UE transmit the RRC connection release message to the remote UE. In this scenario, the first message may also be referred to as a first downlink SRB1 message in the RRC connection resume procedure. The first mapping relationship is a mapping relationship between an SRB1 and the Uu relay RLC channel. In this example, the first downlink message is a downlink SRB1 message sent by a CU to a DU.

### (4) The first message is an RRC setup message.

For example, in an RRC connection reestablishment or resume procedure, if the gNB-CU cannot find UE context information of the remote UE (for example, the gNB-CU performs determining, and the gNB-CU cannot determine the UE context information of the remote UE, and cannot indicate the gNB-DU to obtain UE context of the remote UE), the gNB-CU generates and sends an RRC setup (RRCsetup) message, and transmits the RRC setup message to the remote UE by using the relay UE. In this scenario, the first message may also be referred to as a first downlink SRB0 message in the RRC connection reestablishment or resume procedure. Optionally, the gNB-CU needs to determine a mapping relationship between an SRB0 and the Uu relay RLC channel, and send the mapping relationship between an SRB0 and the Uu relay RLC channel to the gNB-DU. In this example, the first downlink message is a downlink SRB0 message sent by a CU to a DU.

### (5) The first message is an RRC reject message.

For example, in an RRC connection resume procedure, if the gNB-CU rejects RRC connection resume of the remote UE, the gNB-CU may send an RRC reject (RRCreject) message to the remote UE. In this scenario, the first message may also be referred to as a first downlink SRB0 message in the RRC connection resume procedure. Optionally, the gNB-CU needs to determine a mapping relationship between an SRB0 and the Uu relay RLC channel, and send the mapping relationship between an SRB0 and the Uu relay RLC channel to the gNB-DU. In this example, the first downlink message is a downlink SRB0 message sent by a CU to a DU.

Optionally, for (1), (2), (3), and (5), whether the first mapping relationship in the UE context information of the remote UE is used or the first mapping relationship is re-determined may be determined based on a status of the relay UE.

Optionally, there may be a sequence of implementing S101 and S102. For example, S101 is performed before S102. Alternatively, S101 and S102 may be simultaneously performed. For example, the second network device simultaneously sends the indication information and the first message. Alternatively, S102 may be performed before S101. In this case, after receiving the first message, the first network device determines the first mapping relationship after the second network device sends the indication information, and transmits the first message based on the first mapping relationship. Specific implementations are not limited in this application.

S103: The first network device transmits the first message based on the first mapping relationship.

For example, the gNB-DU sends the RRC connection reestablishment message, the RRC connection resume message, the RRC connection release message, the RRC setup message, or the RRC reject message to the relay UE through a corresponding Uu relay RLC channel based on the mapping relationship between the SRB of the remote UE and the Uu relay RLC channel.

It may be understood that the foregoing examples do not limit the solutions of this application.

In this embodiment, before sending the first message, the second network device may send the indication information to the first network device, so that the first network device can determine, based on the indication information, a configuration of the first mapping relationship used to transmit the first message, to correctly transmit the first message. In this way, the first terminal device reestablishes or resumes the first connection through the second terminal device, and correctly accesses the base station.

3. If the second network device does not update the first mapping relationship, a specific implementation of the communication method provided in this application is as follows.

Specifically, in this embodiment, the second network device may apply an original SRAP configuration in the context of the UE (namely, an SRAP configuration used before the reestablishment or resume procedure of the first connection). The SRAP configuration includes the first mapping relationship between the first bearer and the second bearer.

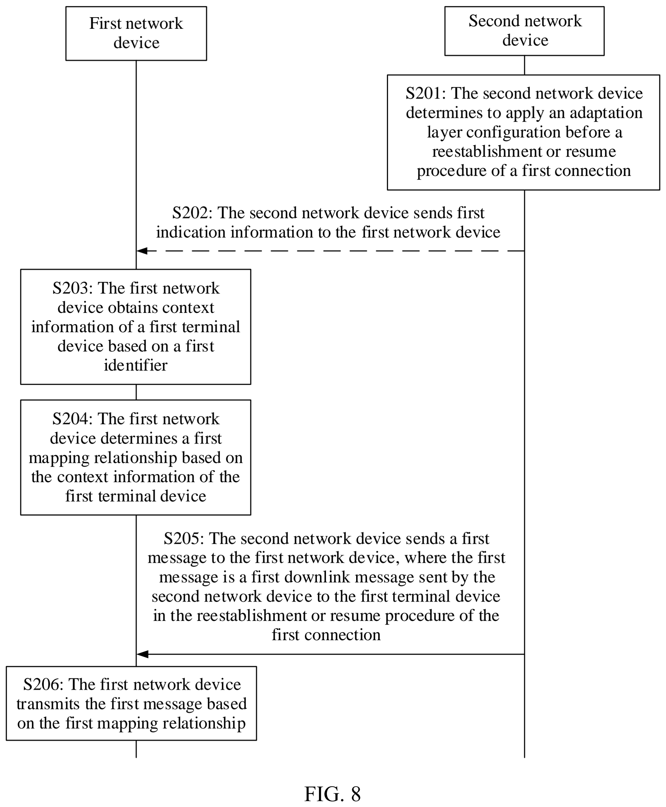

For example, FIG. 8 is a schematic flowchart of another communication method according to this application. The method includes the following steps.

S201: The second network device determines to apply an adaptation layer configuration before a reestablishment or resume procedure of a first connection.

Optionally, the second network device may determine, based on a second message and information corresponding to the second terminal device, that the second terminal device is a relay terminal device associated with the first terminal device before the reestablishment or resume procedure of the first connection. In this case, the second network device determines to apply the adaptation layer configuration before the reestablishment or resume procedure of the first connection. For example, the second message is an SRB0 message, and the SRB0 message includes an RRC connection reestablishment or resume request message sent by the remote UE. Optionally, the SRB0 message further includes information about the remote UE, for example, an I-RNTI/C-RNTI of the remote UE. The information corresponding to the second terminal device includes, for example, a second identifier (for example, a relay UE gNB-DU F1AP ID) of the second terminal device, service information of the second terminal device (for example, historical service information of the relay UE), and context information of the second terminal device (for example, UE context information of the relay UE). For example, the gNB-DU sends the SRB0 message and the relay UE gNB-DU F1AP ID to the gNB-CU by using an F1AP message. If the gNB-CU determines, based on the relay UE gNB-DU F1AP ID and the I-RNTI/C-RNTI of the remote UE in the SRB0 message, that the remote UE performs RRC connection reestablishment or RRC resume by using an original relay UE, the original SRAP configuration may be applied. The original relay UE is a relay terminal device that provides a relay service for the remote UE before the RRC connection reestablishment or resume procedure.

S202: The second network device sends first indication information to the first network device, where the first indication information indicates a first identifier of the first terminal device, and the first identifier is used by the first network device to associate the first terminal device on an F1 interface between the first network device and the second network device.

For example, the first identifier of the first terminal device is an old gNB-DU UE F1AP ID of the remote UE (namely, an F1AP ID allocated by an original gNB-DU to the remote UE before the RRC connection reestablishment or resume procedure of the remote UE), and the old gNB-DU UE F1AP ID is used in the RRC connection reestablishment or resume procedure, indicating the original gNB-DU to search for UE context information of the remote UE. The UE context information includes an original SRAP configuration, and the SRAP configuration includes the first mapping relationship between the first bearer and the second bearer. For example, the first mapping relationship includes a mapping relationship between an SRB1 (used to carry an RRC connection reestablishment message, an RRC connection resume message, or an RRC connection release message) of the remote UE and a Uu relay RLC channel. For another example, the first mapping relationship includes a mapping relationship between an SRB0 (used to carry an RRC setup message or an RRC reject message) of the remote UE and the Uu relay RLC channel.

S203: The first network device obtains context information of the first terminal device based on the first identifier.

For example, the gNB-DU searches for UE context information of the remote UE based on the old gNB-DU UE F1AP ID of the remote UE, where the UE context information includes an originally configured mapping relationship between a radio bearer of the remote UE and the Uu relay RLC channel.

S204: The first network device determines the first mapping relationship based on the context information of the first terminal device.

In a possible implementation, S204 specifically includes the following procedure.

The first network device determines the first mapping relationship based on second indication information and the context information of the first terminal device, where the second indication information indicates the first network device to apply the first mapping relationship.

For example, the gNB-CU may indicate, based on the second indication information, the gNB-DU to apply the originally configured first mapping relationship. In this case, the gNB-DU may determine, based on the found UE context information of the remote UE, to apply the originally configured mapping relationship that is between the radio bearer of the remote UE and the Uu relay RLC channel and that is included in the UE context information.

Optionally, when the gNB-DU searches for the UE context and actively releases the mapping relationship between the radio bearer of the remote UE and the Uu relay RLC channel by default, the gNB-CU may indicate the gNB-DU to retain the originally configured mapping relationship between the radio bearer of the remote UE and the Uu relay RLC channel. In this case, the gNB-DU may determine, based on the found UE context information of the remote UE, to apply the originally configured mapping relationship between the radio bearer of the remote UE and the Uu relay RLC channel.

Optionally, if the gNB-CU indicates the gNB-DU not to release an originally configured SRAP configuration (for example, additionally sends 1-bit indication information to indicate not to release the SRAP configuration), the gNB-DU may determine, based on the found UE context information of the remote UE, to apply the originally configured mapping relationship between the radio bearer of the remote UE and the Uu relay RLC channel.

In another possible implementation, S204 specifically includes the following procedure.

The first network device determines the first mapping relationship based on the first identifier of the first terminal device, the context information of the first terminal device, and the information corresponding to the second terminal device.

For example, the gNB-DU may determine, based on the old gNB-DU UE F1AP ID of the remote UE and information corresponding to the relay UE (for example, including the second identifier (for example, the relay UE F1AP ID) of the second terminal device, the service information of the second terminal device (for example, historical service information of the relay UE), and the context information of the second terminal device (for example, the UE context information of the relay UE)), that the remote UE performs access from an original relay UE. Therefore, the first mapping relationship configured in the UE context of the first terminal device may be applied. The gNB-DU determines, based on the found UE context information of the remote UE, that the first mapping relationship is the originally configured mapping relationship between the radio bearer of the remote UE and the Uu relay RLC channel.

Optionally, if the gNB-DU finds that the gNB-CU does not configure a mapping relationship, and a mapping relationship in the UE context of the remote UE is unavailable, for example, the gNB-DU determines that the remote UE performs access through new relay UE, the gNB-DU may further request the gNB-CU to indicate the first mapping relationship.

Optionally, the first network device may determine, based on the first identifier of the first terminal device and the information corresponding to the second terminal device, to release a second mapping relationship. The second mapping relationship is included in the context information of the first terminal device, and the first mapping relationship is different from the second mapping relationship. For example, it is assumed that before the RRC connection reestablishment or resume procedure, the context information of the first terminal device includes a mapping relationship between the radio bearer of the remote UE and the Uu relay RLC channel (for example, includes a mapping relationship between an SRB0/SRB1/SRB2 and the Uu relay RLC channel). The first mapping relationship includes the mapping relationship between the SRB1 and the Uu relay RLC channel, and the second mapping relationship includes the mapping relationship between the SRB0/the SRB2 and the Uu relay RLC channel. The gNB-DU may determine, based on the old gNB-DU UE F1AP ID of the remote UE and the information corresponding to the relay UE, that the remote UE performs access from the original relay UE, and may release the mapping relationship between the SRB0/the SRB2 and the Uu relay RLC channel.

Optionally, the first network device receives third indication information from the second network device, where the third indication information indicates the first network device to release the second mapping relationship. For example, the gNB-CU may additionally send 1-bit indication information to the gNB-DU, to indicate to release the mapping relationship between the SRB0/the SRB2 and the Uu relay RLC channel.

S205: The second network device sends a first message to the first network device, where the first message is a first downlink message sent by the second network device to the first terminal device in the reestablishment or resume procedure of the first connection. For example, the first message is an RRC connection reestablishment message, an RRC connection resume message, an RRC connection release message, or an RRC reject message. For specific descriptions of the first message and a specific implementation of S205, refer to the descriptions of the first message (including the descriptions of (1), (2), (3), and (5) of the first downlink message) and the procedure in which the second network device sends the first message to the first network device in S102. Details are not described herein again.

S206: The first network device transmits the first message based on the first mapping relationship.

For a specific implementation of S206, refer to the corresponding description in S103. Details are not described herein again.

Optionally, there may be a sequence of implementing S202 and S205. For example, S202 is performed before S205. Alternatively, S202 and S205 may be simultaneously performed. For example, the second network device simultaneously sends the indication information and the first message. Alternatively, S205 may be performed before S202. In this case, after receiving the first message, the first network device determines the first mapping relationship after the second network device sends the indication information, and transmits the first message based on the first mapping relationship. Specific implementations are not limited in this application.

In this embodiment, when the first terminal device reestablishes or resumes the first connection through the second terminal device, if the second network device does not update the first mapping relationship and the first network device has an available first mapping relationship, the second network device may indicate the first network device to forward the first message by using the first mapping relationship in the original UE context information. In this way, the first terminal device reestablishes or resumes the first connection through the second terminal device, and correctly accesses the base station. Optionally, when the first message is the RRC setup message or the RRC reject message, the first network device can correctly send a first downlink SRB message.

4. If the second network device updates the first mapping relationship, a specific implementation of the communication method provided in this application is as follows.

Specifically, in this embodiment, the second network device may update the SRAP configuration. The SRAP configuration includes the first mapping relationship between the first bearer and the second bearer. In other words, the second network device updates the first mapping relationship.

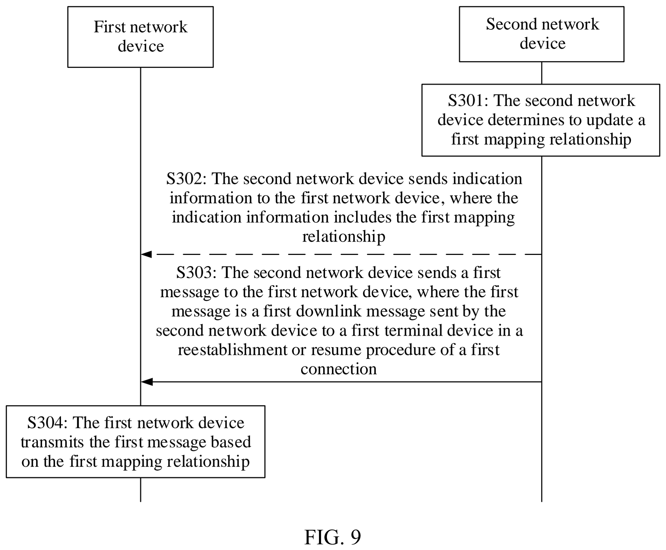

For example, FIG. 9 is a schematic flowchart of another communication method according to this application. The method includes the following steps.

S301: A second network device determines to update a first mapping relationship.

In a possible implementation, when remote UE reestablishes or resumes an RRC connection through original relay UE, the second network device may update a first mapping relationship by using the originally configured first mapping relationship (for example, S201), or may not update the first mapping relationship by using the originally configured first mapping relationship. For example, the second network device re-determines the mapping relationship between the SRB1 of the remote UE and the Uu relay RLC channel.

In another possible implementation, when the remote UE reestablishes or resumes an RRC connection through new relay UE, the second network device determines to update the first mapping relationship. Optionally, the second network device determines, based on the first identifier of the first terminal device, the context information of the first terminal device, and the information corresponding to the second terminal device, to update the first mapping relationship. A relay terminal device associated with the second terminal device is different from a relay terminal device associated with the first terminal device before a reestablishment or resume procedure of a first connection. The relay terminal device associated with the second terminal device is different from the relay terminal device associated with the first terminal device before the reestablishment or resume procedure of the first connection. In other words, the relay UE is new relay UE.

For example, the second message is an SRB0 message, and the SRB0 message includes an RRC connection reestablishment or resume request message sent by the remote UE. Optionally, the SRB0 further includes information about the remote UE, for example, an I-RNTI/C-RNTI of the remote UE. For example, the information corresponding to the second terminal device includes a new relay UE F1AP ID, and the new relay UE F1AP ID may be carried in an INITIAL UL RRC message. For example, a gNB-DU sends the SRB0 message and the new relay UE F1AP ID to the gNB-DU by using the INITIAL UL RRC message.

In this case, the gNB-CU may re-determine a mapping relationship between the SRB1 of the remote UE and a new Uu relay RLC channel (based on the new relay UE).

Optionally, when the remote UE reestablishes or resumes an RRC connection through the new relay UE, the new relay UE may be connected to a new first network device. In this case, the second network device may further reconfigure the first mapping relationship for the first network device. For example, the second network device sends the mapping relationship between the SRB1 of the remote UE and the new Uu relay RLC channel (based on the new relay UE) to the first network device.

S302: The second network device sends indication information to the first network device, where the indication information includes the first mapping relationship.

It may be understood that the first mapping relationship is an updated first mapping relationship. For example, the gNB-CU may directly send the mapping relationship between the SRB1 of the remote UE and the new Uu relay RLC channel to the gNB-DU.

Optionally, the first network device may determine, based on the first identifier of the first terminal device and the information corresponding to the second terminal device, to release a second mapping relationship. For example, if the gNB-DU determines that the remote UE reestablishes or resumes the RRC connection through the new relay UE, the gNB-DU determines to release a mapping relationship between an SRB0/SRB2 in the context information of the first terminal device and an original Uu relay RLC channel. Optionally, the first network device receives third indication information from the second network device, where the third indication information indicates the first network device to release the second mapping relationship. For example, the gNB-CU may additionally send 1-bit indication information to the gNB-DU, to indicate to release the mapping relationship between the SRB0/the SRB2 in the context information of the first terminal device and the original Uu relay RLC channel.

S303: The second network device sends a first message to the first network device, where the first message is a first downlink message sent by the second network device to the first terminal device in the reestablishment or resume procedure of the first connection. For example, the first message is an RRC connection reestablishment message, an RRC connection resume message, an RRC connection release message, an RRC setup message, or an RRC reject message. For specific descriptions of the first message and a specific implementation of S303, refer to the descriptions of the first message (including the descriptions of (1) to (5) of the first downlink message) and the procedure in which the second network device sends the first message to the first network device in S102. Details are not described herein again.

S304: The first network device transmits the first message based on the first mapping relationship.

For a specific implementation of S304, refer to the corresponding description in S103. Details are not described herein again.

Optionally, there may be a sequence of implementing S302 and S303. For example, S302 is performed before S303. Alternatively, S302 and S303 may be simultaneously performed. For example, the second network device simultaneously sends the indication information and the first message. Alternatively, S303 may be performed before S302. In this case, after receiving the first message, the first network device determines the first mapping relationship after the second network device sends the indication information, and transmits the first message based on the first mapping relationship. This is not limited in this application.

In this embodiment, if the second network device updates the first mapping relationship, the second network device may directly send the updated first mapping relationship to the first network device, so that the first network device transmits the first message based on the updated first mapping relationship. In this way, the first terminal device reestablishes or resumes the first connection through the second terminal device, and correctly accesses the base station.

The following provides detailed descriptions when the communication methods described in the second part to the fourth part are applied to an RRC connection reestablishment procedure in the CU-DU split architecture.

5. It is assumed that regardless of whether the second network device updates or does not update the first mapping relationship, the originally configured SRAP configuration is not released. Specific implementation of the communication method provided in this application is as follows.

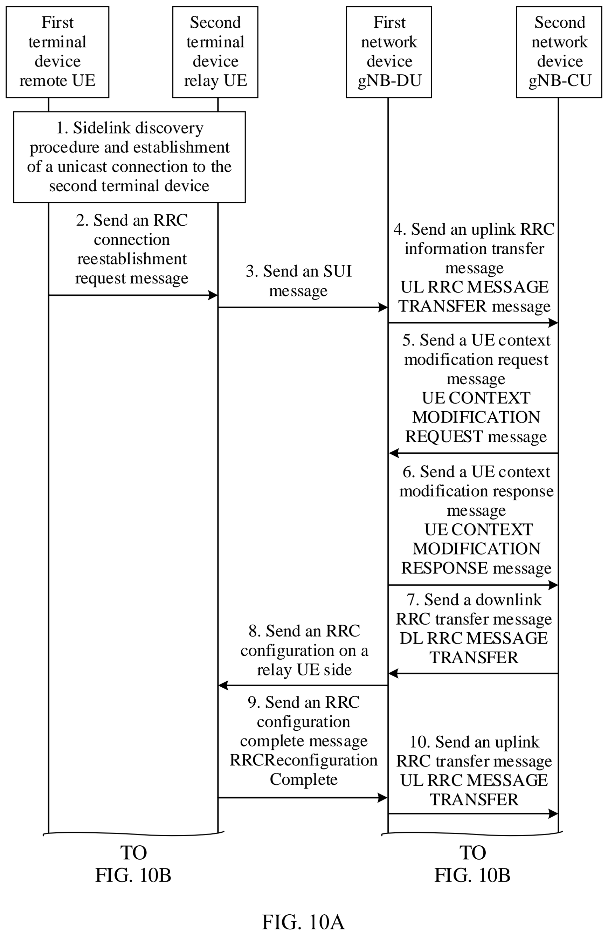

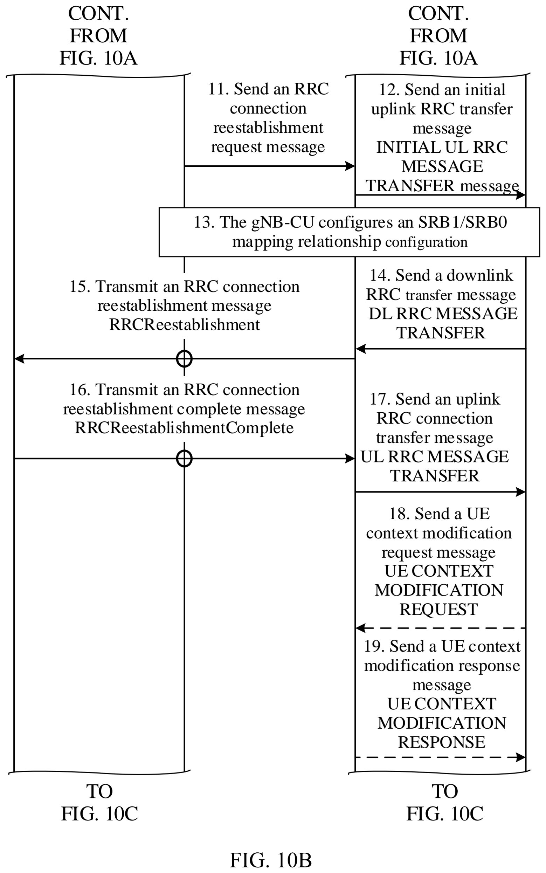

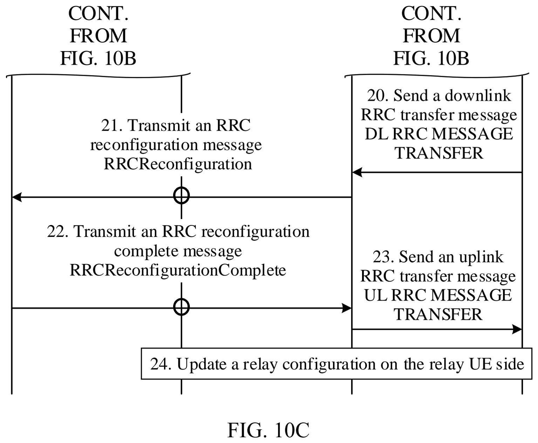

FIG. 10A to FIG. 10C are a schematic flowchart of yet another communication method according to this application. The procedure includes a working procedure in which a first terminal device (remote UE) reestablishes an RRC connection through a second terminal device (relay UE) and a base station (including a gNB-CU and a gNB-DU) configures an SL relay for remote UE in the CU-DU split architecture.

Step 1: The remote UE searches for appropriate relay UE by using a discovery procedure on a sidelink, and establishes a unicast connection to selected relay UE.

Step 2: The remote UE sends an RRC connection reestablishment request message to the relay UE through a PC5 relay RLC channel corresponding to an SRB (for example, an SRBO), to request the relay UE to forward the RRC connection reestablishment request message to a first network device.

Step 3: The relay UE sends an SUI message to the base station, where the SUI message carries a source L2 ID identifier of the remote UE.

Step 4: The gNB-DU sends, to the gNB-CU, an uplink RRC information transfer message (UL RRC MESSAGE TRANSFER message) carrying the SUI message. After receiving the message, the gNB-CU allocates a local ID to the remote UE, and configures the relay UE to provide a relay for the remote UE.

Step 5/6: Perform a UE context modification (UE CONTEXT MODIFICATION) procedure of the relay UE, to generate a relay configuration on a relay UE side. Specifically, the gNB-CU sends a UE context modification request message (UE CONTEXT MODIFICATION REQUEST message) to the gNB-DU, to request to establish a Uu relay RLC channel. The Uu relay RLC channel is used to carry an SRB0 message of the remote UE (optionally, the Uu relay RLC channel used to carry an SRB1 may be included). The gNB-DU sends a UE context modification response message (UE CONTEXT MODIFICATION RESPONSE message) to the gNB-CU, to provide a required Uu relay RLC channel configuration for the gNB-CU.

Step 7/8: The gNB-CU generates an RRC configuration (RRCReconfiguration) on a relay UE side, and sends the RRC configuration to the relay UE through the gNB-DU. For example, the gNB-CU sends a downlink RRC transfer message (DL RRC MESSAGE TRANSFER) to the gNB-DU, where the message carries the RRC configuration on the relay UE side. The gNB-DU sends the RRC configuration on the relay UE side to the relay UE.

Step 9/10: The relay UE feeds back RRC configuration completion to the gNB-CU. For example, the relay UE sends an RRC configuration complete (RRCReconfigurationComplete) message to the gNB-DU, and the gNB-DU sends an uplink RRC transfer message (UL RRC MESSAGE TRANSFER) to the gNB-CU, where the message carries the RRCReconfigurationComplete.

Step 11: The relay UE sends an RRC connection reestablishment request message of the remote UE to the gNB-DU based on a configuration of the base station (including the local ID of the remote UE, a configuration of the Uu relay RLC channel, and a mapping relationship between at least one SRB0 and the Uu relay RLC channel).

Step 12: The gNB-DU adds the RRC connection reestablishment request message of the remote UE to an initial uplink RRC transfer message (INITIAL UL RRC MESSAGE TRANSFER message), and sends the message to the gNB-CU. In addition, the message further includes a relay UE F1AP ID and the local ID of the remote UE, to indicate, to the gNB-CU, that the remote UE is associated with the relay UE. In step 4, the local ID is allocated by the gNB-CU. The message may further include a PC5 relay RLC channel configuration corresponding to an SRB1 message of the remote UE.

Steps 1 to 12 include but are not limited to the following cases.

Case 1: The remote UE accesses an original gNB-DU through an original relay UE, and performs RRC connection reestablishment.

In Case 1, when the remote UE requests, through the original relay UE, to reestablish an RRC connection, the remote UE may not release a sidelink connection that has been previously established with the original relay UE. Therefore, step 1 may not be performed in Case 1. In addition, the remote UE performs reestablishment through the original relay UE. Therefore, a relay forward configuration of the remote UE is configured on an original relay UE side. Therefore, when receiving the RRC connection reestablishment request message from the remote UE, the original relay UE directly forwards the RRC connection reestablishment request message based on an original SRB0 mapping relationship configuration (including a mapping relationship between an SRB0 and the Uu relay RLC channel) (steps 3 to 10 can be skipped and step 11 is directly performed). In other words, in step 11, the relay UE sends the RRC connection reestablishment request message of the remote UE to the original gNB-DU based on the original mapping relationship between the SRB0 and the Uu relay RLC channel.

In step 12, the original gNB-DU includes the SRB0 in an INITIAL UL RRC MESSAGE TRANSFER message, and forwards the message to the gNB-CU. In addition, the message further includes an original relay UE F1AP ID and a local ID of the remote UE. The local ID of the remote UE is a local ID added to an adaptation layer header when the relay UE forwards the SRB0 message. Based on step 12, the gNB-CU determines that the remote UE reestablishes an RRC connection through the original relay UE (similar to S201).

Case 2: The remote UE accesses the original gNB-DU through new relay UE, and performs RRC connection reestablishment.

In Case 2, when the remote UE accesses the original gNB-DU through new relay UE, a Uu relay RLC channel (considered as a new Uu relay RLC channel) between the new relay UE and the original gNB-DU is used to carry data of the remote UE on Uu. Therefore, a mapping relationship between the relay UE side and the gNB-DU side needs to be reconfigured. In other words, steps 1 to 12 need to be sequentially performed in Case 2. For example, in step 5/6, a new relay configuration on the relay UE side needs to be generated (including generating a mapping relationship between the SRB0/the SRB1 and the new Uu relay RLC channel). In step 7/8, a new RRC configuration on the relay UE side needs to be generated, and the like. For a specific implementation, refer to descriptions in a protocol standard. Details are not described herein again.

In step 12, the gNB-DU adds the RRC connection reestablishment request message of the remote UE, a gNB-DU UE F1AP ID of the new relay UE, and the local ID of the remote UE to the INITIAL UL RRC MESSAGE TRANSFER message. The gNB-CU determines, based on information carried in the RRC message sent by the remote UE and F1AP ID information of the relay UE, that the remote UE performs RRC reestablishment through the new relay UE, and determines that the SRAP mapping relationship configuration needs to be updated (similar to S301).

Case 3: The remote UE accesses a new gNB-DU through the new relay UE, and performs RRC connection reestablishment.

In Case 3, when the remote UE accesses the new gNB-DU through the new relay UE, because the new gNB-DU cannot directly obtain UE context of the remote UE, the gNB-CU needs to re-determine SRAP mapping relationship configurations on the relay UE side and the gNB-DU side.

For example, in step 12, the gNB-CU determines, based on the remote UE information carried in the RRC reestablishment request message and the new relay UE F1AP ID indicated by the gNB-DU, and determines that the remote UE performs RRC reestablishment through a new gNB-DU (similar to optional descriptions in S301).

Step 13: The gNB-CU configures, on the relay UE side, the PC5 relay RLC channel and the Uu relay RLC channel for relaying and forwarding the SRB1 message of the remote UE, and a mapping relationship between the SRB1 and the PC5/Uu relay RLC channel. In addition, the gNB-CU sends the foregoing configuration to the relay UE through the gNB-DU, to transmit an SRB1 message (for example, including an RRC connection reestablishment message and an RRC connection reestablishment complete message).

Step 14/15: The gNB-CU generates an RRC connection reestablishment message of the remote UE, and transmits the RRC connection reestablishment message to the remote UE through the gNB-DU and the relay UE. For example, the gNB-CU sends a downlink RRC transfer message (DL RRC MESSAGE TRANSFER) to the gNB-DU, and the gNB-DU transmits an RRC connection reestablishment message (RRCReestablishment) to the remote UE through the relay UE.

In steps 13 to 15, the Case 1 to Case 3 are also different implementations, including the following.

### For Case 1:

In step 13, because both the relay UE and the gNB-DU are original devices, the gNB-CU does not need to reconfigure the mapping relationship between the SRB1 and the PC5/Uu relay RLC channel on the relay UE side. For example, in step 14, the gNB-CU generates an RRC connection reestablishment message of the remote UE, adds the RRC connection reestablishment message to a DL RRC MESSAGE TRANSFER message, and sends the DL RRC MESSAGE TRANSFER message to the gNB-DU. Optionally, if the procedure is an RRC connection resume procedure, in step 14, the gNB-CU generates an RRC connection resume message or an RRC connection release message of the remote UE, adds the RRC connection resume message or the RRC connection release message to a DL RRC MESSAGE TRANSFER message, and sends the DL RRC MESSAGE TRANSFER message to the gNB-DU. Optionally, in the RRC connection reestablishment or resume procedure, the gNB-CU generates and transmits the first downlink SRB0 message in step 14, and the first downlink SRB0 message may be an RRC reject message. For specific descriptions of the foregoing message, refer to descriptions of the first message (including descriptions of (1), (2), (3), and (5) of the first downlink message) in S102. Details are not described herein again.

Optionally, the gNB-CU may further send indication information to the gNB-DU, to indicate the old gNB-DU UE F1AP ID of the remote UE. The old gNB-DU UE F1AP ID of the remote UE is used by the gNB-DU to search for UE context of the remote UE. The UE context includes the previously configured SRAP mapping relationship configuration (similar to S202 to S205).

In a possible implementation, the gNB-CU determines to apply the original configuration. Therefore, the gNB-CU does not need to update an SRB1 mapping relationship (a mapping relationship between an SRB1 and a Uu relay RLC channel) on a gNB-DU side. Correspondingly, an original SRB1 mapping relationship is also used on the relay UE side.

Optionally, in step 13, the gNB-CU updates only a configuration of the PC5 relay RLC channel. Optionally, step 13 is not performed.

Optionally, in step 14, the gNB-CU does not send an SRAP mapping relationship configuration update indication to the gNB-DU.

Optionally, in step 14, the gNB-CU sends indication information to the gNB-DU, and the gNB-DU may apply the SRB1 mapping relationship configuration in the UE context information based on the indication information (similar to a possible implementation described in S204).

Optionally, in step 14, the gNB-DU may determine, based on the old gNB-DU UE F1AP ID and the associated relay UE, that the remote UE performs access from the original relay UE. Therefore, an SRB1 mapping relationship configuration in the UE context information may be applied (similar to another possible implementation described in S204).

Optionally, in step 14, it is assumed in this embodiment that after the gNB-DU searches for the UE context information of the remote UE based on the old gNB-DU UE F1AP ID indicated by the gNB-CU, the SRAP configuration in the UE context information is not released by default, the gNB-CU may indicate the gNB-DU to retain the SRB1 mapping relationship configuration, or indicate configurations that can be retained (for example, indicate to retain a mapping relationship configuration of the SRBO).

Optionally, in step 15, the gNB-DU sends the RRC connection reestablishment message of the remote UE to the relay UE based on the SRB1 mapping relationship configuration in the UE context information.

In another possible implementation, the gNB-CU determines to update the SRB1 mapping relationship (the mapping relationship between the SRB1 and the Uu relay RLC channel). Therefore, in step 13, the gNB-CU determines a new mapping relationship between the SRB1 and the Uu relay RLC channel, and updates the mapping relationship of the SRB1 on the relay UE side.

Optionally, in step 14, the gNB-CU sends indication information to the gNB-DU, to indicate the gNB-DU to update the SRAP mapping relationship configuration. The indication information includes a new mapping relationship between the SRB1 and the Uu relay RLC channel (similar to S301 and S302).

Optionally, in step 15, the gNB-DU transmits the RRC connection reestablishment message to the remote UE through the relay UE based on the new mapping relationship that is between the SRB1 and the Uu relay RLC channel and that is indicated by the gNB-CU.

### For Case 2:

In step 13, the gNB-CU updates the SRB1 mapping relationship configuration on the relay UE side, including updating a mapping relationship between the SRB1 and the Uu relay RLC channel and a mapping relationship between the SRB1 and the PC5 relay RLC channel.

In step 14, the gNB-CU sends indication information to the gNB-DU, where the indication information includes a new mapping relationship between the SRB1 and the Uu relay RLC channel. Optionally, the gNB-CU sends the old gNB-DU UE F1AP ID of the remote UE to the gNB-DU, so that the gNB-DU searches for UE context.

Optionally, it is assumed in this embodiment that after the gNB-DU searches for the UE context information based on the old gNB-DU UE F1AP ID indicated by the gNB-CU, and after the UE context information of the remote UE, the SRAP configuration in the context information of the UE is not released by default. When the mapping relationship between the SRB1 and the Uu relay RLC channel and the mapping relationship between the SRB1 and the PC5 relay RLC channel are updated, the gNB-CU may further indicate the gNB-DU to release all SRAP mapping relationship configurations (for example, including an original mapping relationship between the SRB1/the SRB0 and the Uu relay RLC channel) obtained by searching for the UE context, and apply a newly configured SRB1 mapping relationship configuration. Alternatively, the gNB-DU determines, based on the old gNB-DU UE F1AP ID indicated by the gNB-CU and the relay UE associated with the UE, that the remote UE accesses the base station through the new relay UE, and autonomously releases the SRAP mapping relationship configuration obtained by searching for the UE context information.

For example, in step 15, the gNB-DU transmits the RRC connection reestablishment message to the remote UE through the relay UE based on the new mapping relationship between the SRB1 and the Uu relay RLC channel. Optionally, if an RRC connection resume procedure is performed, in step 15, the gNB-DU transmits the RRC connection resume message or the RRC connection release message to the remote UE through the relay UE based on the new mapping relationship between the SRB1 and the Uu relay RLC channel. Optionally, in the RRC connection reestablishment or resume procedure, the gNB-DU transmits the first downlink SRB0 message in step 15, and the first downlink SRB0 message may be an RRC reject message. For specific descriptions of the foregoing message, refer to descriptions of the first message (including descriptions of (1), (2), (3), and (5) of the first downlink message) in S102. Details are not described herein again.

### For Case 3:

In step 13, the gNB-CU determines a new SRB1 mapping relationship configuration (including a new mapping relationship between the SRB1 and the Uu relay RLC channel), and updates the SRB1 mapping relationship on the relay UE side.

In step 14, the gNB-CU sends a new mapping relationship between the SRB1 and the Uu relay RLC channel to the gNB-DU.

Optionally, if the gNB-CU determines, based on the message received in step 12, that the remote UE reestablishes the RRC connection through a new gNB-DU, the gNB-CU needs to determine and carry a new mapping relationship between the SRB0 and the Uu relay RLC channel in step 14.

For example, in step 15, the gNB-DU transmits the RRC connection reestablishment message to the remote UE through the relay UE based on the new mapping relationship between the SRB1 and the Uu relay RLC channel. Optionally, if an RRC connection resume procedure is performed, in step 15, the gNB-DU transmits the RRC connection resume message or the RRC connection release message to the remote UE through the relay UE based on the new mapping relationship between the SRB1 and the Uu relay RLC channel. Optionally, in the RRC connection reestablishment or resume procedure, the gNB-DU transmits the first downlink SRB0 message in step 15, and the first downlink SRB0 message may be an RRC reject message. For specific descriptions of the foregoing message, refer to descriptions of the first message (including descriptions of (1), (2), (3), and (5) of the first downlink message) in S102. Details are not described herein again.

Step 16/17: The remote UE transmits an RRC connection reestablishment complete (RRCReestablishmentComplete) message to the gNB-CU through the relay UE and the gNB-DU. For example, the remote UE transmits the RRCReestablishmentComplete message to the gNB-DU through the relay UE. The gNB-DU sends an uplink RRC connection transfer message (UL RRC MESSAGE TRANSFER) to the gNB-CU, where the message carries the RRCReestablishmentComplete message.

Step 18/19: The gNB-CU may trigger a UE context change of the remote UE. For example, the gNB-CU sends a UE context modification request (UE CONTEXT MODIFICATION REQUEST) message to the gNB-DU, and the gNB-DU sends a UE context modification response (UE CONTEXT MODIFICATION RESPONSE) message to the gNB-CU.

In steps 18 and 19, Case 1 to Case 3 are also different implementations, including the following.

### For Case 1:

Optionally, the gNB-CU may update an SRAP mapping relationship configuration (for example, a mapping relationship between an SRB2/DRB and the Uu relay RLC channel) other than the SRB1 mapping relationship configuration. Specifically, the update may be performed in the UE context update procedure in steps 18 and 19. Optionally, the gNB-CU may not update an SRAP mapping relationship configuration other than the SRB1 mapping relationship configuration, and may not perform steps 18 and 19.

### For Case 2:

Because the originally configured SRAP mapping relationship configuration needs to be updated, steps 18 and 19 are mandatory, and are at least used to update the SRAP mapping relationship configuration on the gNB-DU side.

### For Case 3:

The gNB-CU triggers a UE CONTEXT SETUP procedure, that is, step 18 is a UE CONTEXT SETUP REQUEST procedure, to indicate the gNB-DU to establish a new SRB/DRB mapping relationship of the remote UE. Step 19 is a UE CONTEXT SETUP RESPONSE procedure, and is used by the gNB-DU to provide a lower-layer configuration according to an instruction of the gNB-CU. For a specific implementation, refer to a corresponding description in the protocol standard. Details are not described herein again.

Step 20/21: The gNB-CU generates an RRC reconfiguration message (RRCReconfiguration) of the remote UE, and sends the RRC reconfiguration message to the remote UE. For example, the gNB-CU sends a downlink RRC transfer message (DL RRC MESSAGE TRANSFER) to the gNB-DU, where the message carries the RRCReconfiguration. The gNB-DU transmits the RRC reconfiguration message to the remote UE through the relay UE.

Step 22/23: The remote UE sends an RRC reconfiguration complete message (RRCReconfigurationComplete). For example, the remote UE transmits the RRC reconfiguration complete message to the gNB-DU through the relay UE. The gNB-DU sends an uplink RRC transfer message (UL RRC MESSAGE TRANSFER) to the gNB-CU, where the message carries the RRCReconfigurationComplete.

Step 24: The base station updates a relay configuration on the relay UE side, and configures a Uu/PC5 relay RLC channel used to carry the DRB and the SRB of the remote UE and an SRAP mapping relationship. For a specific implementation, refer to a corresponding description in the protocol standard. Details are not described herein again.

Optionally, in the CU-DU split architecture, a procedure in which the first terminal device resumes the RRC connection through the second terminal device is similar. For details, refer to the procedure shown in FIG. 10A to FIG. 10C. A difference lies in that the RRC connection reestablishment request message in step 2/11, the RRC connection reestablishment message in step 15, and the reestablishment complete message in step 16 are an RRC connection resume request message (RRCResumeRequest) and an RRC connection resume message (RRCResume), and an RRC connection resume complete message (RRCResumeComplete).

Optionally, in this embodiment, it is assumed that the gNB-CU cannot find the UE context information of the remote UE. In steps 13 to 15, the gNB-CU generates and sends an RRC setup message, and transmits the RRC setup message to the remote UE through the relay UE. Optionally, the gNB-CU needs to determine a mapping relationship between an SRB0 and the Uu relay RLC channel, and send the mapping relationship between an SRB0 and the Uu relay RLC channel to the gNB-DU.

6. It is assumed that regardless of whether the second network device updates the first mapping relationship, the originally configured SRAP configuration is released. Specific implementation of the communication method provided in this application is as follows.

An overall procedure in this embodiment is similar to that in FIG. 10A to FIG. 10C. The following specifically describes a difference between this embodiment and the fifth part of embodiments.

A procedure of steps 1 to 24 are the same as the procedure of steps 1 to 24 in FIG. 10A to FIG. 10C. A difference lies in that when the gNB-DU searches for the UE context information of the remote UE, the originally configured SRAP mapping relationship configuration does not directly take effect by default, is unavailable, or needs to be released. In other words, in steps 13 to 15, Case 1 to Case 3 are also different implementations, including the following.

### For Case 1:

In a possible implementation, the gNB-CU determines to apply the original configuration. However, if the originally configured SRAP mapping relationship configuration has been released, processing manners of the gNB-CU and the gNB-DU include but are not limited to the following several manners.

Manner 1: The gNB-CU explicitly indicates the gNB-DU to apply the mapping relationship between the SRB1 and the Uu relay RLC channel in the original UE context information. For example, the gNB-CU sends second indication information to the gNB-DU (for example, the second indication information is 1-bit indication information, which is similar to S204). However, the gNB-DU releases an SRAP mapping relationship configuration other than the SRB1 mapping relationship. The gNB-DU may transmit an RRC connection reestablishment message, an RRC connection resume message, or an RRC connection release message by using the mapping relationship between the SRB1 and the Uu relay RLC channel in the original UE context information.

Manner 2: The gNB-CU does not send an explicit indication to the gNB-DU, but the gNB-DU determines, based on an access status of the remote UE, to apply the mapping relationship between the SRB1 and the Uu relay RLC channel in the original UE context information. For example, the gNB-DU determines, based on the old gNB-DU UE F1AP ID indicated by the gNB-CU in step 14 and the relay UE associated with the remote UE, that the remote UE performs access through the original relay UE, and therefore determines not to release the SRB1 mapping relationship configuration. However, the gNB-DU releases an SRAP mapping relationship configuration other than the SRB1 mapping relationship. The gNB-DU may transmit an RRC connection reestablishment message, an RRC connection resume message, or an RRC connection release message by using the mapping relationship between the SRB1 and the Uu relay RLC channel in the original UE context information.

Manner 3: Because the gNB-DU has released all original configurations, the gNB-CU may directly send the mapping relationship between the SRB1 and the Uu relay RLC channel in the original UE context information to the gNB-DU. The gNB-DU may transmit an RRC connection reestablishment message, an RRC connection resume message, or an RRC connection release message by using the mapping relationship between the SRB1 and the Uu relay RLC channel in the original UE context information.

In another possible implementation, the gNB-CU determines to update the SRB1 mapping relationship (the mapping relationship between the SRB1 and the Uu relay RLC channel). For example, in step 14, the gNB-CU directly sends a new mapping relationship between the SRB1 and the Uu relay RLC channel to the gNB-DU. The gNB-DU may transmit an RRC connection reestablishment message, an RRC connection resume message, or an RRC connection release message by using the new mapping relationship between the SRB1 and the Uu relay RLC channel.

Optionally, the gNB-CU determines, based on whether the first message sent to the gNB-DU is specifically an RRC connection reestablishment message, an RRC connection resume message, an RRC connection release message, an RRC setup message, or an RRC reject message, to send a mapping relationship between an SRB0 or an SRB1 and a Uu relay RLC channel to the gNB-DU. For example, if the gNB-CU generates an RRC connection reestablishment message, an RRC connection resume message, or an RRC connection release message of the remote UE, the gNB-CU sends the RRC connection reestablishment message, the RRC connection resume message, or the RRC connection release message to the gNB-DU. In addition, the mapping relationship between the SRB1 and the Uu relay RLC channel is sent to the gNB-DU. Optionally, in the RRC connection reestablishment or resume procedure, the gNB-CU generates and transmits the first downlink SRB0 message, and the first downlink SRB0 message may be an RRC reject message. In this case, the gNB-CU sends the RRC setup message or the RRC reject message to the gNB-DU, and sends the mapping relationship between the SRB0 and the Uu relay RLC channel to the gNB-DU.

### For Case 2 and Case 3:

When the remote UE accesses an original gNB-DU through new relay UE, or accesses a new gNB-DU through new relay UE, a mapping relationship on a gNB-DU side needs to be reconfigured. Therefore, even if the originally configured SRAP mapping relationship configuration is released, reconfiguration of the mapping relationship is not affected. In this case, for a specific implementation in Case 2 or Case 3, refer to corresponding descriptions in the fifth part. Details are not described herein again.

To implement functions in the method provided in this application, an apparatus or a device provided in this application may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions. Division into modules in this application is an example, is merely logical function division, and may be other division during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

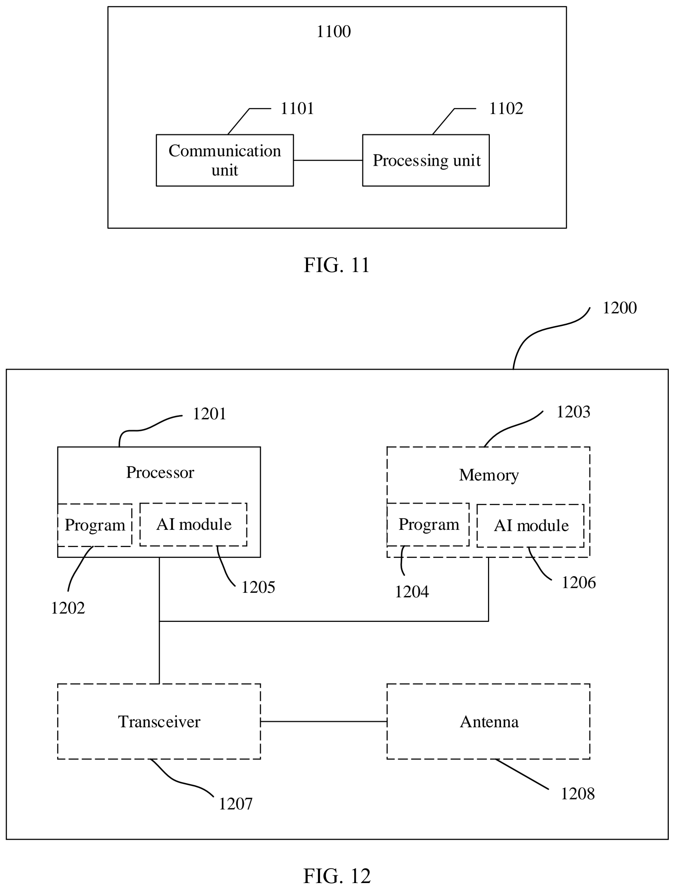

FIG. 11 is a diagram of a communication apparatus according to this application. The apparatus may include modules that are in a one-to-one correspondence with the methods/operations/steps/actions described in any one of the embodiments shown in FIG. 7 to FIG. 10C. The modules may be implemented by a hardware circuit, software, or a combination of a hardware circuit and software.

An apparatus 1100 includes a communication unit 1101 and a processing unit 1102, configured to implement the methods performed by the devices in the foregoing embodiments.

In a possible implementation, the apparatus is an access network device (for example, a DU), or is located in the access network device. Specifically, the communication unit 1101 is configured to receive indication information from a second network device, where the indication information is used to determine a first mapping relationship between a first bearer and a second bearer. The communication unit 1101 is further configured to receive a first message from the second network device, where the first message is a first downlink message sent by the second network device to a first terminal device in a reestablishment or resume procedure of a first connection. The first connection is a connection between a first terminal device and a second network device, the first bearer is used to transmit a first message between the first terminal device and the second network device, and the second bearer is used to transmit the first message between the second terminal device and the first network device. The second terminal device provides a relay service for the first terminal device. The processing unit 1102 is configured to transmit the first message based on the first mapping relationship through the communication unit 1101.

For specific execution procedures of the communication unit 1101 and the processing unit 1102 in this implementation, refer to the descriptions of the steps performed by the first network device in the foregoing method embodiments and the corresponding descriptions in the summary. Details are not described herein again. In the communication method implemented by the apparatus, the access network device receives the indication information, and determines, based on the indication information, the configuration of the first mapping relationship used to transmit the first message, so that the first terminal device reestablishes or resumes the first connection through the second terminal device, and correctly accesses a corresponding access network device.

In another possible implementation, the apparatus is an access network device (for example, a CU), or is located in the access network device. Specifically, the communication unit 1101 is configured to send indication information to the first network device, where the indication information is used to determine the first mapping relationship between the first bearer and the second bearer. The communication unit 1101 is further configured to send a first message to the first network device, where the first message is a first downlink message sent by the second network device to the first terminal device in a reestablishment or resume procedure of a first connection, and the first connection is a connection between the first terminal device and the second network device. The first bearer is used to transmit a first message between the first terminal device and the second network device, and the second bearer is used to transmit the first message between the second terminal device and the first network device. The second terminal device provides a relay service for the first terminal device.

For specific execution procedures of the communication unit 1101 and the processing unit 1102 in this implementation, refer to the descriptions of the steps performed by the second network device in the foregoing method embodiments and the corresponding descriptions in the summary. Details are not described herein again. In the communication method implemented by the apparatus, the second network device sends the indication information to the first network device, so that the first network device can determine, based on the indication information, the configuration of the first mapping relationship used to transmit the first message, and the first terminal device reestablishes or resumes the first connection through the second terminal device, and correctly accesses the base station.

FIG. 12 is a diagram of another communication apparatus according to this application. The communication apparatus is configured to implement the communication methods in the foregoing method embodiments. It may be understood that the communication apparatus 1200 includes, for example, a necessary form like a module, a unit, an element, a circuit, or an interface, to be appropriately configured together to perform the method in this application. For example, the communication apparatus 1200 may be a RAN node, a terminal, a core network device, or another network device, or may be a component (for example, a chip) in these devices, to implement the methods described in the foregoing method embodiments. The communication apparatus 1200 includes one or more processors 1201. The processor 1201 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a RAN node, a terminal, or a chip), execute a software program, and process data of the software program.

Optionally, the processor 1201 may include a program 1202 (which may also be referred to as code or instructions sometimes). The program 1202 may be run on the processor 1201, so that the communication apparatus 1200 performs the method described in the foregoing embodiments. In still another possible design, the communication apparatus 1200 includes a circuit (not shown in FIG. 12). The circuit is configured to implement a function of the CU or the DU in the foregoing embodiments.

Optionally, the communication apparatus 1200 may include one or more memories 1203, and the memory 1203 stores a program 1204 (which may also be referred to as code or instructions sometimes). The program 1204 may be run on the processor 1201, so that the communication apparatus 1200 performs the method described in the foregoing method embodiments.

Optionally, the processor 1201 and/or the memory 1203 may include AI modules 1205 and 1206. The AI module is configured to implement an Al-related function. The AI module may be implemented by using software, hardware, or a combination of the software and the hardware. For example, the AI module may include an RIC module. For example, the AI module may be a near-real-time RIC or a non-real-time RIC.

Optionally, the communication apparatus 1200 further includes a transceiver 1207 and an antenna 1208. The transceiver 1207 and the antenna 1208 can implement a transceiver function, for example, communicate with another device through a transmission medium, so that the apparatus 1200 can communicate with the another device.

In a possible implementation, the apparatus is a DU, or is located in a DU. Specifically, the transceiver 1207 and the antenna 1208 are configured to receive indication information from a second network device, where the indication information is used to determine a first mapping relationship between a first bearer and a second bearer. The transceiver 1207 and the antenna 1208 are further configured to receive a first message from the second network device, where the first message is a first downlink message sent by the second network device to a first terminal device in a reestablishment or resume procedure of a first connection. The first connection is a connection between a first terminal device and a second network device, the first bearer is used to transmit a first message between the first terminal device and the second network device, and the second bearer is used to transmit the first message between the second terminal device and the first network device. The second terminal device provides a relay service for the first terminal device. The processor 1201 is configured to transmit the first message based on the first mapping relationship.

For a specific execution procedure of the communication apparatus 1200 in this implementation, refer to the descriptions of the steps performed by the first network device in the foregoing method embodiments and the corresponding descriptions in the summary. Details are not described herein again. In the communication method implemented by the apparatus, the DU receives the indication information, and determines, based on the indication information, the configuration of the first mapping relationship used to transmit the first message, so that the first terminal device reestablishes or resumes the first connection through the second terminal device, and correctly accesses the base station.

In a possible implementation, the apparatus is a CU, or is located in a CU. Specifically, the transceiver 1207 and the antenna 1208 are configured to send indication information to the first network device, where the indication information is used to determine the first mapping relationship between the first bearer and the second bearer. The transceiver 1207 and the antenna 1208 are further configured to send a first message to the first network device, where the first message is a first downlink message sent by the second network device to the first terminal device in a reestablishment or resume procedure of a first connection, and the first connection is a connection between the first terminal device and the second network device. The first bearer is used to transmit a first message between the first terminal device and the second network device, and the second bearer is used to transmit the first message between the second terminal device and the first network device. The second terminal device provides a relay service for the first terminal device.

For a specific execution procedure of the communication apparatus 1200 in this implementation, refer to the descriptions of the steps performed by the second network device in the foregoing method embodiments and the corresponding descriptions in the summary. Details are not described herein again. In the communication method implemented by the apparatus, the second network device sends the indication information to the first network device, so that the first network device can determine, based on the indication information, the configuration of the first mapping relationship used to transmit the first message, and the first terminal device reestablishes or resumes the first connection through the second terminal device, and correctly accesses the base station.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state disk (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

This application provides another communication apparatus. The device includes a processor and an interface. Optionally, a memory is further included. The processor is coupled to the memory, and the processor is configured to read and execute computer instructions stored in the memory, to implement the communication methods in the embodiments shown in FIG. 7 to FIG. 10C.

This application provides a communication system. The communication system includes one or more of the devices in the embodiments shown in FIG. 7 to FIG. 10C.

This application provides a computer-readable storage medium. The computer-readable storage medium stores a program or instructions. When the program or the instructions are run on a computer, the computer is enabled to perform the communication methods in the embodiments shown in FIG. 7 to FIG. 10C.

This application provides a computer program product. The computer program product includes instructions. When the instructions are run on a computer, the computer is enabled to perform the communication methods in the embodiments shown in FIG. 7 to FIG. 10C.

This application provides a chip or a chip system. The chip or the chip system includes at least one processor and an interface. The interface and the at least one processor are interconnected through a line. The at least one processor is configured to run a computer program or instructions, to perform the communication methods in the embodiments shown in FIG. 7 to FIG. 10C.

The interface in the chip may be an input/output interface, a pin, a circuit, or the like.

The chip system may be a system on chip (system on chip, SOC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a special-purpose dedicated, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, on the premise of no logical contradiction, embodiments may be mutually referenced. For example, methods and/or terms may be mutually referenced between method embodiments. For example, functions and/or terms may be mutually referenced between apparatus embodiments. For example, functions and/or terms may be mutually referenced between an apparatus embodiment and a method embodiment.

It is clear that a person skilled in the art may make various modifications and variations to this application without departing from the scope of this application. Thus, this application is intended to cover such modifications and variations to this application, provided that the modifications and variations fall within the scope of the claims of this application and their equivalent technologies.

## Claims

1. A communication method, applied to a first network device and comprising:
receiving indication information from a second network device, wherein the indication information is used to determine a first mapping relationship between a first bearer and a second bearer;
receiving a first message from the second network device, wherein the first message is a first downlink message sent by the second network device to a first terminal device in a reestablishment or resume procedure of a first connection, and the first connection is a connection between the first terminal device and the second network device; and the first bearer is used to transmit the first message between the first terminal device and the second network device, the second bearer is used to transmit the first message between the second terminal device and the first network device, and the second terminal device provides a relay service for the first terminal device; and
transmitting the first message based on the first mapping relationship.

2. The method according to claim 1, wherein the receiving the indication information from the second network device comprises:
receiving first indication information from the second network device, wherein the first indication information indicates a first identifier of the first terminal device, and the first identifier is used by the first network device to associate the first terminal device on an interface between the first network device and the second network device.

3. The method according to claim 2, wherein that the indication information is used to determine the first mapping relationship between the first bearer and the second bearer comprises:
obtaining context information of the first terminal device based on the first identifier; and
determining the first mapping relationship based on the context information of the first terminal device.

4. The method according to claim 3, wherein the determining the first mapping relationship based on the context information of the first terminal device comprises:
determining the first mapping relationship based on second indication information and the context information, wherein the second indication information indicates the first network device to apply the first mapping relationship.

5. The method according to claim 3, wherein the determining the first mapping relationship based on the context information of the first terminal device comprises:
determining the first mapping relationship based on the first identifier of the first terminal device, the context information of the first terminal device, and information corresponding to the second terminal device, wherein the information corresponding to the second terminal device comprises one or more of a second identifier of the second terminal device, service information of the second terminal device, and context information of the second terminal device.

6. The method according to claim 1 or 2, wherein the indication information comprises the first mapping relationship.

7. The method according to claim 5 or 6, wherein the method further comprises:
determining, based on the first identifier of the first terminal device and the information corresponding to the second terminal device, to release a second mapping relationship, wherein the second mapping relationship is comprised in the context information of the first terminal device, and the first mapping relationship is different from the second mapping relationship.

8. The method according to claim 5 or 6, wherein the method further comprises:
receiving third indication information from the second network device, wherein the third indication information indicates the first network device to release a second mapping relationship, the second mapping relationship is comprised in the context information of the first terminal device, and the first mapping relationship is different from the second mapping relationship.

9. The method according to any one of claims 1 to 8, wherein the first downlink message is a first connection reestablishment message, a first connection resume message, or a first connection release message; and the first bearer is a signaling radio bearer SRB1 message of the first terminal device.

10. The method according to any one of claims 1 to 8, wherein the first downlink message is a first connection establishment message, and the first bearer is an SRB0 message of the first terminal device.

11. The method according to any one of claims 1 to 8, wherein the first downlink message is a first connection reject message, and the first bearer is an SRB0 message of the first terminal device.

12. A communication method, applied to a second network device and comprising:
sending indication information to a first network device, wherein the indication information is used to determine a first mapping relationship between a first bearer and a second bearer; and
sending a first message to the first network device, wherein the first message is a first downlink message sent by the second network device to a first terminal device in a reestablishment or resume procedure of a first connection, and the first connection is a connection between the first terminal device and the second network device; and the first bearer is used to transmit the first message between the first terminal device and the second network device, the second bearer is used to transmit the first message between the second terminal device and the first network device, and the second terminal device provides a relay service for the first terminal device.

13. The method according to claim 12, wherein the sending the indication information to the first network device comprises:
sending first indication information to the first network device, wherein the first indication information indicates a first identifier of the first terminal device, and the first identifier is used by the first network device to associate the first terminal device on an interface between the first network device and the second network device.

14. The method according to claim 13, wherein the first identifier is used by the first network device to obtain context information of the first terminal device, and the context information of the first terminal device comprises the first mapping relationship.

15. The method according to claim 12, wherein the sending the indication information to the first network device comprises:
sending second indication information to the first network device, wherein the second indication information indicates the first network device to apply the first mapping relationship.

16. The method according to claim 15, wherein the method further comprises:
determining, based on a second message and a second identifier of the second terminal device, that the second terminal device is a relay terminal device associated with the first terminal device before the reestablishment or resume procedure of the first connection, wherein the second message is used by the first terminal device to request to perform the reestablishment or resume procedure of the first connection.

17. The method according to claim 12 or 13, wherein the indication information comprises the first mapping relationship.

18. The method according to claim 17, wherein the method further comprises:
determining, based on a second message and a second identifier of the second terminal device, that a relay terminal device associated with the second terminal device is different from a relay terminal device associated with the first terminal device before the reestablishment or resume procedure of the first connection, wherein the second message is used by the first terminal device to request reestablishment or resume of the first connection; and
determining to update the first mapping relationship.

19. The method according to claim 18, wherein the method further comprises:
sending third indication information to the first network device, wherein the third indication information indicates the first network device to release a second mapping relationship, the second mapping relationship is comprised in context information of the first terminal device, and the first mapping relationship is different from the second mapping relationship.

20. The method according to claim 17, wherein the method further comprises:
sending a context information establishment or update request message of the first terminal device to the first network device, wherein the context information establishment or update request message is used to configure a second mapping relationship, and the second mapping relationship is different from the first mapping relationship.

21. The method according to any one of claims 12 to 20, wherein the first downlink message is a first connection reestablishment message, a first connection resume message, or a first connection release message; and the first bearer is an SRB 1 message of the first terminal device.

22. The method according to any one of claims 12 to 20, wherein the first downlink message is a first connection establishment message, and the first bearer is an SRB0 message of the first terminal device.

23. The method according to any one of claims 12 to 20, wherein the first downlink message is a first connection reject message, and the first bearer is an SRBO message of the first terminal device.

24. A communication apparatus, comprising a communication unit and a processing unit, wherein the communication unit and the processing unit are configured to perform the method according to any one of claims 1 to 11 or 12 to 23.

25. A communication apparatus, comprising a processor and a memory, wherein the memory is configured to store instructions, and when the instructions are executed by the processor, the communication apparatus is enabled to perform the method according to any one of claims 1 to 11 or 12 to 23.

26. A communication system, comprising one or more of a first network device, a second network device, a first terminal device, and a second terminal device, wherein the first network device is configured to perform the method according to any one of claims 1 to 11; and the second network device is configured to perform the method according to any one of claims 12 to 23.

27. A computer-readable storage medium, wherein the computer-readable storage medium stores instructions, and when the instructions are run on a computer, the computer is enabled to perform the method according to any one of claims 1 to 11 or 12 to 23.

28. A chip, wherein the chip comprises a processor and an interface, and the processor is configured to execute a computer program or instructions, so that the chip implements the method according to any one of claims 1 to 11 or 12 to 23.

29. A chip system, wherein the chip system comprises a processor and an interface, and the processor is configured to execute a computer program or instructions, so that the chip system implements the method according to any one of claims 1 to 11 or 12 to 23.

30. A computer program product, comprising instructions, wherein when the instructions are run on a computer, the computer is enabled to perform the method according to any one of claims 1 to 11 or 12 to 23.
